Europäisches Patentamt

European Patent Office

Office européen des brevets

(11) Numéro de publication: **0 415 821 A1**

# DEMANDE DE BREVET EUROPEEN

(21) Numéro de dépôt: 90402334.8

(51) Int. Cl.5: **B01D 15/02**, B01D 15/08

(22) Date de dépôt: 22.08.90

(30) Priorité: 28.08.89 FR 8911364

(43) Date de publication de la demande:
06.03.91 Bulletin 91/10

(84) Etats contractants désignés:
**DE ES GB IT NL**

(71) Demandeur: **INSTITUT FRANCAIS DU PETROLE**
**4, Avenue de Bois-Préau**
**F-92506 Rueil-Malmaison Cédex(FR)**

(72) Inventeur: **Terneuil, Gabriel**
**3, rue Tarillon**
**F-38000 Grenoble(FR)**
Inventeur: **Hotier, Gérard**
**13, rue Michelet**
**F-92500 Rueil-Malmaison(FR)**
Inventeur: **Toussaint, Jean Michel**
**18 bis, rue du R.P. Christian Gilbert**
**F-92600 Asnieres(FR)**
Inventeur: **Lonchamp, Daniel**
**27, Montée de Verdun**
**F-69160 Tassin la Demi Lune(FR)**

(54) **Procédé continu et dispositif de séparation chromatographique d'un mélange d'au moins trois constituants en trois effluents purifiés au moyen de deux solvants.**

(57) - On décrit un procédé et un dispositif de séparation en continu et en phase fluide d'un mélange d'au moins trois constituants en trois fractions.

- On utilise une technique dite à contre-courant simulé dans une colonne de séparation remplie d'un sorbant ayant six zones 6,5,4,3,2 et 1 à différentes fonctions et on réalise la séquence d'étapes suivantes : on introduit du solvant dit fort $S_2$, on prélève un extrait $E_2$ au solvant fort, on introduit du solvant dit faible $S_1$. On soutire de l'extrait au solvant faible $E_1$, on introduit le mélange à séparer, on soutire du raffinat au solvant faible R, on introduit du solvant de rinçage ($S_1$), on recycle un courant Rcy alternativement vers l'alimentation du solvant fort $S_2$ et puis vers l'alimentation du solvant faible $S_1$. On envoie un courant issu de la zone 6 alternativement vers une sortie d'extrait au solvant fort $E_2$, puis vers l'entrée de la cinquième zone. On fait périodiquement avancer de manière synchrone à travers la colonne les diverses alimentations et soutirages.

Application notamment à la séparation de glucose, xylose et arabinose et à la séparation de paraxylène, d'orthoxylène et métaxylène et d'éthylbenzène.

FIG.2

La présente invention concerne un procédé et un dispositif de séparation en continu, en phase fluide (liquide, vapeur ou supercritique) de trois ou de plus de trois composants d'un mélange fluide (liquide, vapeur ou supercritique) à l'aide de particules solides ou d'un gel perméable semi-solide capables d'adsorber de manière sélective au moins deux composés du mélange dont l'un très fortement de sorte qu'une simple élution soit particulièrement peu indiquée pour le désorber. Plus particulièrement, elle concerne 1) l'application de la technique dite "du contre-courant simulé" aux séparations réalisées jusqu'à présent par chromatographie préparative en gradient d'élution qui se rencontrent par exemple en chimie pharmaceutique en chimie fine ou en biochimie. Elle concerne également 2) les domaines d'application classiques du procédé de séparation en continu en phase liquide utilisant le système du contre-courant simulé à condition que les charges renferment au moins trois constituants, par exemple dans le cas de la coupe $C_8$ aromatique, il peut être intéressant de séparer en une seule opération continue du paraxylène, de l'éthylbenzène et un mélange ortho et métaxylène. Un autre exemple est constitué par le mélange Xylose Arabinose Glucose 3) les domaines d'application encore embryonnaires de la chromatographie supercritique préparative tels que production d'aromes et d'huiles essentielles.

Plus généralement cette technique s'applique lorsque l'on a affaire à au moins trois produits non séparables par distillation, soit parce que leurs points d'ébullition sont trop proches, soit parce qu'ils sont thermiquement instables.

La plupart des appareillages d'adsorption de gros tonnages comportant un adsorbant solide, utilisés par exemple pour le séchage des gaz, l'adsorption d'une substance organique, la séparation de n-paraffines en phase gazeuse ou la production d'hydrogène par à-coups de pression sont utilisés suivant la technique consistant à employer plusieurs lits d'adsorption comportant les particules adsorbantes solides pour réaliser une adsorption, une désorption et une régénération en phase gazeuse. Cependant il est plus difficile d'utiliser cette technique en phase liquide car même lors de la phase de sorption il reste une fraction importante de charge non adsorbée dans l'espace interparticulaire de la phrase de sorption et dans la Macroporosité des particules. Dans ces conditions il est très difficile d'obtenir le produit désiré avec à la fois un bon rendement, une bonne pureté et à un coût énergétique intéressant.

Pour remédier à cet inconvénient on peut procéder soit en augmentant le nombre de réacteurs de manière à pouvoir faire des purges qui sont ensuite recyclées soit à des balayages par un autre composé en principe non ou peu adsorbable. Ceci présente l'inconvénient évident de compliquer la procédure et d'augmenter le coût de la distillation subséquente. On conçoit donc facilement qu'un procédé séquentiel de sorption désorption où le mélange d'alimentation liquide présente, soit un faible facteur de séparation, soit encore un corps très fortement retenu par l'adsorbant, ne puisse conduire à des effluents à la fois de bonne pureté et de concentration élevée.

Dans le cas où l'on ne désire séparer que deux effluents distincts les procédés basés sur le "contre-courant simulé" tel que décrit dans les brevets US 2 985 589, 3 696 107, 3 706 812, 3 761 533 ou dans le brevet français 2 103 302 se révèlent être efficaces puisqu'ils permettent d'arriver à produire en continu des effluents à la fois de bonne pureté et en solution concentrée dans le désorbant. Selon le brevet US 4 306 107 il est décrit un procédé de séparation en continu d'un mélange à quatre constituants : le métaxylène, l'orthoxylène, le paraxylène et l'éthylbenzène par la technique du contre-courant simulé en présence d'un solvant, le toluène. Trois fractions sont obtenues : la première contenant le métaxylène pur récupéré à 100 %, la troisième contenant de l'éthylbenzène pur récupéré seulement à 60 % et la seconde comprenant un mélange de para- et d'ortho-xylène récupérés à 100 % mais aussi d'éthylbenzène représentant 40 % de la quantité initiale. Ce procédé présente donc l'inconvénient d'une récupération partielle du produit le moins adsorbé et de la récupération d'un mélange au niveau de la fraction intermédiaire.

Pour les appareils d'adsorption de petit tonnage avec lesquels on fabrique quelques kilos à la fois de produits à haute valeur ajoutée le problème est en général très différent du précédent. Il arrive assez souvent que l'on cherche à isoler un produit pur particulier, peu concentré, au sein d'un mélange d'au moins une dizaine de corps purs, produits par exemple, lors de la dernière étape d'une synthèse. Les modes de production sont plutôt discontinus, et le coût de la séparation solvant-produit purifié n'intervient que peu dans le prix de revient final. La technique de séparation utilisée vise donc essentiellement à séparer le produit recherché avec tout d'abord un bon rendement puis une bonne pureté, l'aspect concentration dans le ou les solvants de séparation n'étant, soit pas du tout, soit très peu pris en compte. La technique du gradient d'élution quoique complexe est souvent utilisée dans la pratique. Elle consiste à envoyer une charge complexe sur la colonne puis à éluer par un premier solvant qui, ne présentant que peu d'affinité pour la phase fixe, ne déplace notablement que les corps peu retenus par cet adsorbant. Au cours de l'avancement de cette opération on remplace peu à peu ce premier solvant par un second qui présente une très forte affinité pour l'adsorbant et qui donc déplace quasiment tous les corps contenus dans la charge comme s'ils n'étaient pas du tout retenus par l'adsorbant. C'est donc la variation progressive et continue du pouvoir solvant et de l'affinité de l'éluant dans la colonne qui produit une élution graduelle des différents produits de la charge. Le produit recherché sera donc recueilli sous forme d'une fraction particulière du courant élué. La phase suivante consiste à reconditionner la colonne par le premier des deux solvants. De plus, périodiquement la colonne doit être régénérée, parce que lés phases fixes utilisées sont souvent sensibles à l'empoisonnement par des traces de certains corps contenus dans la charge ou l'un ou l'autre des deux solvants. La technique du gradient d'élution est susceptible de fonctionner selon plusieurs principes physiques employés en chromatographie liquide, on peut notamment citer :

1) La chromatographie par perméation de gel qui fonctionne suivant le principe d'exclusion : les grosses molécules incapables d'entrer dans lés cavités du gel sont éluées en premier tandis que les plus petites transitant par toutes les cavités disponibles sont éluées en dernier. Le gradient d'élution peut modifier le phénomène de deux manières :

a) en agissant sur les molécules de la charge : par une solvatation de plus en plus forte. Des molécules de rayon de gyration au départ identique, en conformation de type pelote "statistique", se solvateront et se déplieront différemment suivant leur fonctionnalité ;

b) en agissant sur la phase fixe : par un gonflement progressif du gel ; on restreindra progressivement la taille des cavités en ne retenant que des molécules de plus en plus petites.

2) La chromatographie en phase inverse qui joue sur le coefficient de partage des solutés entre une phase aqueuse et une phase organique. Un exemple connu contribue à séparer un mélange de produits organiques peu solubles dans l'eau sur une silice greffée $C_{18}$ au moyen d'un gradient eau-méthanol. Au fur et à mesure que la concentration en méthanol dans la phase mobile augmente les produits les plus liposolubles se détachent petit à petit de la phase fixe.

3) La chromatographie d'affinité qui fonctionne soit sur les liaisons de type Van der Waals soit sur les liaisons "hydrogène" entre soluté et phase fixe. Lorsque l'on remplace un solvant apolaire type hydrocarbure par un solvant polaire type chlorure de méthylène ou chloroforme on arrive à éluer des solutés de plus en plus polaires.

La technique du gradient d'élution n'implique pas forcément d'employer deux solvants différents. On peut fonctionner en gradient de pH où les deux solvants sont remplacés par deux solutions tamponnées. On peut également fonctionner en gradient de pression (un seul solvant supercritique) avec l'appoint d'un "entraîneur" en général sous forme de traces (jusqu'à 3 %).

La variété des phases fixes et des couples de solvants est telle que la majorité des séparations réputées impossibles il y a 25 ans sont aujourd'hui réalisées. A titre d'exemple on peut citer la résolution d'énantiomères ou de mélanges racémiques (avec des phases fixes optiquement actives) "Preparative separation of enantiomers on axially compressed column" K.H. Rimböck, F. Kastner, A. Mannschreck, Journal of Chromatography n° 329 (1985) p. 307-310.

Ces méthodes présentent le désavantage de ne pas être continues bien qu'automatisables, Réf. J. Krohn, F. Verillon (international laboratory octobre 1986). Elles sont conçues pour produire tout au plus quelques dizaines de kilogrammes par an, avec un appareillage très souple et versatile susceptible de servir à de nombreuses séparations différentes suivant la demande.

L'art antérieur est décrit également par le brevet US 4,498,991. Il est possible selon ce document d'obtenir deux fractions à partir d'un mélange contenant trois composés ou plus de sorte que, pour rendre possible une séparation multi constituants, il faut mettre en oeuvre une unité de séparation par constituant à séparer, ce qui est particulièrement coûteux en investissement et en solvants utilisés. Selon un autre brevet FR 2.274.331, il est aussi possible, par l'introduction de deux courants de solvants de force différente dans un appareillage à contre-courant simulé, d'aboutir à la séparation d'un mélange conduisant à un seul effluent de bonne pureté.

L'art antérieur est enfin illustré par les brevets EP-A-0.290.684 et US-A-3,728,843.

L'objet de la présente invention est de remédier aux inconvénients précités. Notamment, un des objets de l'invention est l'obtention, à partir d'un mélange d'au moins trois constituants, de trois fractions (chacune d'elles contenant au moins un constituant, le ou les constituants de chaque fraction étant sensiblement récupéré à 100 %).

Un autre objet est d'obtenir une fraction intermédiaire entre la fraction de tête et la fraction de queue pouvant contenir un mélange de produits récupérés sensiblement à 100 %. Un autre objet est d'obtenir une fraction intermédiaire pouvant ne contenir qu'un seul constituant sensiblement pur et récupéré sensiblement à 100 %.

Un autre objet est de mieux intégrer les phases de purge dans les procédés cycliques en produisant ou en recyclant au traitement une fraction intermédiaire.

L'invention a pour objet en bref de séparer en continu avec un haut degré de pureté et en concentration élevée une charge constituée d'un mélange d'au moins trois produits en trois effluents distincts avec :

1) une efficacité et une simplicité plus grandes que la simple association en série de deux unités classiques de contre-courant simulé

2) une consommation de solvant très réduite et une quantité de phase fixe plus faible qu'avec une séparation discontinue isocratique ou en gradient d'élution.

En d'autres termes l'invention a pour objet de réunir en un seul procédé fonctionnant en continu les techniques du gradient d'élution et du contre-courant simulé, sans que l'invention ne puisse être considérée comme une simple juxtaposition de deux étapes distinctes.

Un autre objet de l'invention est d'apporter une amélioration substantielle au contre-courant simulé classique (où seuls deux effluents : un raffinat et un extrait sortent de l'unité). Il arrive en effet assez souvent que la charge contienne des traces d'un produit très fortement adsorbé sur la phase fixe. Il en résulte une accumulation qui fait baisser progressivement les performances de l'unité et nécessite à la longue un arrêt pour régénérer l'adsorbant. Grâce à l'invention on peut éviter ces arrêts soit en régénérant en continu, soit de préférence en appliquant périodiquement une séquence de régénération qui ne stoppe pas pour autant la production.

De manière générale, l'invention concerne un procédé de séparation en continu et en phase fluide d'un mélange ou charge, d'au moins trois constituants en trois fractions, dans lequel on fait circuler un fluide comprenant ledit mélange et du solvant à co-courant sur un sorbant contenu dans au moins une colonne de séparation présentant à intervalles réguliers d'espace, des entrées d'alimentation d'au moins une partie du fluide circulant en aval de ces entrées, des sorties de soutirage d'au moins une partie du fluide circulant en aval de ces entrées, ladite colonne présentant une liaison ou boucle de circulation externe du fluide entre une extrémité amont et une extrémité aval, on fait se déplacer à co-courant les dites sorties de soutirage et les entrées d'alimentation dans des conditions dites à contre-courant simulé, les constituants présentant vis-à-vis du sorbant et du solvant des degrés de forte, moyenne et faible adsorption relative, le procédé étant caractérisé par la combinaison des étapes suivantes :

a) On détermine six zones contigues 1,2,3,4,5 et 6 ayant des fonctions distinctes et étant connectées en série entre elles de sorte que les dites zones et la liaison externe assurent une continuité.

b) On détermine une zone 1 de reconditionement du sorbant de la colonne, ladite zone étant définie par une quantité de sorbant localisée entre une entrée d'un courant de rinçage à son extrémité amont et une sortie d'un courant de recyclage a son extrémité aval.

c) On détermine une zone 2 d'adsorption du ou des constituants les moins adsorbés dans la colonne immédiatement en amont de la zone 1, ladite zone 2 étant définie par une quantité de sorbant localisée entre une sortie d'un raffinat R "au solvant faible" à une extrémité amont de cette zone et une entrée d'un courant de rinçage à une extrémité aval de ladite zone.

d) On détermine une zone 3 d'adsorption du ou des constituants moyennement adsorbés dans la colonne immédiatement en amont de la zone 2, ladite zone 3 étant définie par une quantité de sorbant localisée entre une entrée dudit mélange à son extrémité amont de la sortie du raffinat R au solvant faible à son extrémité aval.

e) On détermine une zone 4 de désorption du ou des constituants les moins adsorbés immédiatement en amont de la zone 3, ladite zone 4 étant définie par une quantité de sorbant localisée entre ladite entrée du mélange à une extrémité aval, et une sortie d'un extrait $E_1$ au solvant dit faible, défini ci-dessous, à une extrémité amont de ladite zone 4.

f) On détermine une zone 5 de désorption du ou des constituants moyennement adsorbés immédiatement en amont de la zone 4, ladite zone 5 étant définie par une quantité de sorbant localisée entre ladite sortie de l'extrait $E_1$ au solvant faible à une extrémité aval et une entrée d'une alimentation en solvant faible à une extrémité amont de ladite zone 5.

g) On détermine une zone 6 de désorption du ou des constituants les plus adsorbés immédiatement en amont de la zone 5, ladite zone 6 étant définie par une quantité de sorbant localisée entre une sortie d'un extrait $E_2$ au solvant dit fort défini ci-dessous à une extrémité aval de ladite zone 6 et une entrée d'une alimentation en solvant fort à une extrémité amont de ladite zone.

h) On alimente en solvant dit fort $S_2$ l'extrémité amont de la zone 6, en solvant dit faible $S_1$ l'extrémité amont de la zone 5 et en ledit mélange l'extrémité amont de la zone 3, le solvant $S_2$ étant différent par sa nature chimique du solvant $S_1$.

i) On fait circuler le mélange et un courant issu de la zone 4 dans la zone 3 dans des conditions d'adsorption telles qu'elles permettent l'adsorption du ou des constituants moyennement adsorbés dans ladite zone 3 et l'on soutire le raffinat R comprenant le ou les constituants les moins adsorbés et une partie du solvant faible.

j) On fait circuler le solvant fort $S_2$ dans a zone 6 et une partie au moins du courant issu de la zone 1 dans des conditions de désorption telles qu'elles permettent la désorption du ou des constituants les plus adsorbés dans la zone 6 et l'on soutire l'extrait $E_2$ comprenant le ou les constituants les plus adsorbés et une majeure partie du solvant $S_2$, de la zone 6.

k) On fait circuler le solvant $S_1$ et la partie restante du courant de la zone 6 dans la zone 5 dans des conditions de désorption telles qu elles permettent la désorption du ou des constituants moyennement adsorbés dans la zone 5 et l'on soutire l'extrait $E_1$ comprenant le ou les constituants moyennement adsorbés et une partie du solvant $S_1$ de la zone 5.

l) On fait circuler un courant issu de la zone 5 dans la zone 4 dans des conditions de désorption telles qu'elles permettent la désorption du ou des constituants les moins adsorbés et moyennement adsorbés dans la zone 5.

m) On fait circuler la partie restante du courant issu de la zone 3 dans la zone 2 dans des conditions d'adsorption telles qu'elles permettent l'adsorption du ou des constituants les moins adsorbés dans la zone 2.

n) On alimente en ledit courant de rinçage contenant du solvant dit faible $S_1$ l'extrémité amont de la zone 1 et on fait circuler ledit courant de rinçage et un courant issu de la zone 2 dans la zone 1 dans des conditions telles qu'elles permettent le reconditionnement de la colonne et l'on soutire le courant de recyclage de la zone.

o) On fait périodiquement avancer de manière synchrone à travers la colonne de sorbant dans la direction de la circulation du mélange et des solvants, l'entrée du mélange, la sortie du raffinat R, l'entrée du courant de rinçage F, la sortie du courant de recyclage, l'entrée du solvant dit fort $S_2$, la sortie de l'extrait $E_2$, l'entrée de solvant dit faible $S_1$, la sortie de l'extrait $E_1$, de façon à déplacer les zones 1,2,3,4,5 et 6 dans la colonne de sorbant et à produire les trois fractions : le raffinat R, l'extrait $E_1$ et l'extrait $E_2$, chacune des trois fractions contenant au moins un constituant, le ou les constituants de chaque fraction étant sensiblement récupérés en totalité ; le procédé étant en outre caractérisé en ce qu'on fait circuler le courant de recyclage prélevé à l'extrémité aval de la zone 1 alternativement à l'extrémité amont de la zone 6 puis à l'extrémité amont de la zone 5 et en ce qu'on fait circuler une partie au moins du courant prélevé à l'extrémité aval de la zone 6 alternativement à l'extrémité amont de la zone 5 puis vers la sortie de l'extrait au solvant fort $S_2$.

En opérant ainsi, on récupère sensiblement tout le solvant fort du volume intergrain du sorbant et on évite de polluer la zone 6 d'adsorption du constituant le plus adsorbé, par du solvant faible.

Plus précisément, on introduit en continu, en phase liquide, vapeur ou supercritique :

1) deux fluides désorbants $S_1$ et $S_2$ qui diffèrent par leur nature chimique et éventuellement par leur température et par leur pression d'utilisation, et qui présentent des affinités différentes pour la phase fixe de contact définie plus bas (sorbant).

2) un mélange d'alimentation qui contient au moins trois constituants dont deux au moins sont adsorbés de manière largement différente par la phase fixe de contact définie plus bas. Ces trois flux sont mis en contact avec des particules de sorbant et circulent à travers les zones définies ci-dessus.

Par solvant fort $S_2$, on entend un solvant pour lequel le sorbant a une affinité plus grande que celle qu'il peut avoir pour un solvant faible $S_1$. On peut dans ces conditions utiliser les solvants à des températures différentes ou à des pressions différentes, ou à des températures et des pressions différentes.

Le solvant ou désorbant utilisé est particulièrement choisi en fonction du type d'adsorbant, de la séparation des constituants à effectuer et de la séparation ultérieure, par distillation par exemple, entre le solvant et les constituants.

Le solvant peut être choisi par exemple parmi les solvants organiques, l'eau, le dioxyde de carbone.

Ce solvant, dans la dénomination solvant dit fort $S_2$ est généralement utilisé à une température supérieure d'au moins 10° C et avantageusement supérieure de 20 à 50° C à celle du même solvant dit faible $S_1$. Le solvant selon l'invention $S_2$ peut aussi être utilisé à une pression supérieure d'au moins 1 MPa et avantageusement supérieure de 2 à 20 MPa à celle du même solvant dit faible $S_1$.

Il peut ainsi être intéressant de combiner une température et une pression plus élevées pour le solvant dit fort par exemple d'au moins 10° C et d'au moins 1 MPa, que celles du solvant dit faible. On peut même opérer avec un solvant dit fort à une pression plus élevée d'au moins 1 MPa et à une température plus faible d'au moins 10° C que celles recommandées pour le solvant dit faible, le résultat devant être dans tous les cas que le sorbant ait une affinité plus grande pour le solvant $S_2$ fort que pour le solvant dit faible.

Le solvant est en général miscible avec le mélange. On ne rencontre habituellement qu'une seule phase à la fois dans l'espace interparticulaire du sorbant.

Ce sorbant (adsorbant, absorbant ou gel) est judicieusement choisi en fonction de la séparation de constituants à réaliser dans un milieu solvant donné. Il est généralement choisi dans le groupe formé par les zéolithes naturelles ou synthétiques, les charbons actifs, les silices, les silice-alumines éventuellement greffées les argiles éventuellement pontées, les polymères et copolymères éventuellement fonctionnalisés tels que le gel de polystyrène réticulé au divinylbenzène et par exemple sulfoné, les résines échangeuses d'ions, et leurs mélanges.

La granulométrie est habituellement comprise entre 1 micromètre et 1 cm et de préférence comprise entre 5 micromètres et 1 millimètre. Elle est généralement choisie, de manière à réaliser un compromis optimal entre la séparation et la perte de charge admissible. La forme des particules de sorbant peut être quelconque et de préférence sphérique.

La température et la pression de la séparation sont généralement celles comprises sensiblement entre la température et la pression d'utilisation du solvant fort $S_2$ et la température a la pression d'utilisation du solvant faible $S_1$.

Chaque zone est constituée de plusieurs sections d'égal volume reliées en série, chaque section étant remplie d'une masse de particules d'un adsorbant solide.

Selon le principe du contre-courant simulé en général, le temps est divisé en cycles définis comme le temps au bout duquel la configuration de l'unité se retrouve exactement à l'identique. Chaque cycle est divisé en autant de périodes que l'unité comporte de sections. Chaque période définit le temps s'écoulant entre les permutations de section d'une zone à l'autre.

A chaque période, l'unité se retouve homothétique à elle-même : le nombre de sections dans chaque zone restant constant, tandis que les points d'introduction et de prélèvement se déplacent d'une section. Pendant chaque période les débits à l'intérieur de chaque zone restent constants.

Selon le principe particulier de l'invention chaque période est en outre divisée en deux ou trois étapes, chaque étape étant définie comme un temps pendant lequel tous les débits restent constants -étant entendu que dans deux zones successives, les débits sont en général différents.

Les conditions d'adsorption et les conditions de désorption selon le procédé de l'invention mettent en jeu, en général, des débits d'alimentation et de soutirage mis en oeuvre par des moyens de régulation de ces débits, tels que les fronts d'élution se déplacent dans les différentes zones de l'amont vers l'aval de la colonne (direction de l'écoulement) avec sensiblement la méme vitesse.

Selon une caractéristique de l'invention, on peut alimenter les différentes zones et récupérer les différents effluents de la façon suivante :

a) On alimente la zone 6 durant une première étape avec un débit $d_3 = d_1 + d_2$ avec $d_1$ étant le débit du courant de recyclage issu de la zone 1 et $d_2$ étant le débit d'alimentation en solvant fort $S_2$, puis durant une deuxième étape avec un débit $d_3$, de solvant fort $S_2$ sensiblement identique au débit lors de la première étape, et on récupère durant la première étape du solvant faible que l'on envoie dans un réservoir de stockage et durant une seconde étape, on récupère l'extrait $E_2$ au solvant fort que l'on sépare de façon à obtenir le ou les constituants les plus adsorbés.

b) On alimente la zone 5 durant une première étape avec un débit $d_5$ tel que $d_5 < d_3$ d'une partie au moins du solvant faible provenant du réservoir ci-dessus et durant la seconde étape, on alimente la zone 5 avec un débit $d_1$ du courant de recyclage issu de la zone 1 et avec un débit $d_4$, tel que $d_4 = d_5 - d_1$, de la partie restante de solvant faible issue du réservoir de stockage puis éventuellement de solvant faible supplémentaire, et on recupère au moins en partie l'extrait $E_1$ avec un débit $d_6$ tel que $d_6 < d_5$, que l'on sépare de façon à obtenir le ou les constituants moyennement adsorbés.

c) On alimente la zone 4 en la partie restante du flux issu de la zone 5 avec un débit égal à $d_5 - d_6$ de façon à obtenir en sortie un courant issu de la zone 4 de même débit.

d) On alimente la zone 3 en ledit mélange avec un débit $d_7$ et en ledit courant issu de la zone 4 avec ledit $d_5-d_6$, soit un débit total $d_5 - d_6 + d_7$ et l'on récupère avec un débit $d_8$ une partie au moins du raffinat R au solvant faible que l'on sépare de façon à obtenir le ou les constituants les moins adsorbés, le débit $d_8$ étant tel que $d_8 + d_6 = d_4 + d_7$.

e) On alimente la zone 2 en la partie restante issue de la zone 3 avec un débit égal à $d_5 - d_6 + d_7 - d_8$, soit $d_1$ et on obtient en sortie avec un débit $d_1$ un courant issu de la zone 2.

f) On alimente la zone 1 en ledit courant issu de la zone 2 pendant une première étape avec un débit $d_1$ et on récupère avec un débit $d_1$ le courant de recyclage pour alimenter la zone 6 comme indiqué dans l'étape a), et pendant une deuxième étape, on alimente la zone 1 avec un débit $d_1 + d_9$, $d_1$ étant le débit du courant issu de la zone 2, $d_9$ étant le débit du courant de rinçage et on soutire avec un débit $d_1 + d_9$ le courant de recyclage que l'on envoie avec un débit $d_1$ à l'entrée de la zone 5 et avec un débit $d_9$ vers une distillation pour séparer le solvant faible du solvant fort.

L'invention concerne aussi le dispositif permettant notamment la mise en oeuvre du procédé, en continu. Il comprend un dispositif de séparation en continu et en phase fluide d'un mélange d'au moins trois constituants en trois fractions caractérisé en ce qu'il comprend en combinaison au moins une colonne de séparation comportant six zones contigues dont chacune comprend au moins une section remplie d'un sorbant, chaque section étant de volume sensiblement identique et ayant une entrée et une sortie, la sortie d'une section étant reliée à l'entrée de la suivante par une liaison 100 adaptée à la circulation du fluide dans une direction déterminée grâce à des moyens anti-retour 34 connectés à cette liaison, l'entrée de chaque section comportant, des moyens d'alimentation en un courant de rinçage 35, des moyens d'alimentation 38 en mélange, des moyens d'alimentation 36 en solvant S1 et des moyens d'alimentation 37 en solvant S2, la sortie de chaque section comportant en amont des moyens anti-retour, des moyens de soutirage 31 d'un extrait E1 au solvant faible S1, des moyens de soutirage 30 d'un extrait E2 au solvant fort S2, des moyens de soutirage 32 d'un raffinat R au solvant faible, des moyens de soutirage 33 d'un courant de reyclage, au plus soit un de ces moyens d'alimentation étant adapté à délivrer une alimentation, soit un des moyens de soutirage étant adapté à délivrer un soutirage : deux de ces moyens ne peuvent pas entrer en action simultanément entre deux sections déterminées.

Le dispositif est caractérisé en outre en ce que l'ensemble de ces moyens d'alimentation et de soutirage sont agencés de telle façon que :
- une sixième zone 6 est délimitée par une entrée reliée aux moyens d'alimentation en solvant S2 et par une sortie reliée aux moyens de soutirage en extrait E2 au solvant fort ;
- une cinquième zone 5 immédiatement en aval de la sixième zone reliée aux moyens d'alimentation en solvant S1, dit faible et par une sortie reliée aux moyens de soutirage en extrait E1 au solvant faible ;
- une quatrième zone 4 immédiatement en aval de la cinquième zone est délimitée par une entrée reliée à la sortie de la cinquième zone et par une sortie reliée aux moyens d'alimentation en mélange ;
- une troisième zone 3 immédiatement en aval de la quatrième zone est délimitée par une entrée reliée à la sortie de la quatrième zone 4 et par une sortie reliée aux moyens de soutirage de raffinat R au solvant faible ;
- une seconde zone 2 immédiatement en aval de la troisième zone est délimitée par une entrée reliée à la sortie de la troisième zone et par une sortie reliée aux moyens d'alimentation en courant de rinçage ;
- une première zone 1 immédiatement en aval de la seconde zone est délimitée par une entrée à la sortie de la seconde zone et par une sortie reliée aux moyens de soutirage du courant de recyclage ;
le dispositif est en outre caractérisé en ce qu'il comprend :
- des moyens de déplacements successifs, dans la direction de la circulation du fluide d'une part, des dits moyens de soutirage de l'extrait E1, de l'extrait E2, du raffinat A et du courant de recyclage et d'autre part des dits moyens en alimentation en solvant S1, en solvant S2, en courant de rinçage, et, en mélange, ces moyens étant adaptés à réaliser des conditions dites à contre-courant simulé, le dispositif étant de plus caractérisé en ce qu'il comporte des moyens adaptés à connecter la sortie de la première zone 1 alternativement à l'entrée de la sixième zone 6 puis à l'entrée de la cinquième zone 5 et en ce qu'il comporte des moyens adaptés à connecter la sortie de la sixième zone 6 alternativement à l'entrée de la cinquième zone 5 puis aux moyens de soutirage de l'extrait E1 au solvant fort.

Selon la complexité du mélange, on choisit le nombre total de sections de colonne. De préférence, ce nombre de sections est compris entre 4 et 24. Les sections de colonne sont en général de même section et de forme cylindrique. Une liaison externe relie chaque section et peut comporter de manière avantageuse, l'ensemble des moyens d'alimentation en solvants, en courant de rinçage et en mélange en aval des moyens anti-retour cités ci-haut. La liaison peut comporter, avantageusement, l'ensemble des moyens de soutirage ci-dessus en extraits, en raffinat et en courant de recyclage, en amont des moyens anti-retour.

Selon une variante de mise en oeuvre permettant de minimiser le débit $d_3$ de solvant faible circulant dans la zone 1, la seconde étape de chaque période peut être scindée en plusieurs phases : a) introduction de solvant faible pur à l'entrée de la première section de la zone 1 et évacuation à la sortie de la dernière section vers un réservoir tampon ; b) introduction du contenu du réservoir tampon à l'entrée de la seconde section de la zone 1 et recyclage à la sortie vers le réservoir tampon ; c) introduction du contenu du réservoir tampon à l'entrée de la seconde section de la zone 1 et évacuation à la sortie de la dernière section vers une colonne à distiller optionnelle.

Pendant cette seconde période on continue à introduire au débit $d_1$ l'effluent de la section 2 et prélever une partie de l'effluent de la section 1 (débit $d_1$) vers la zone 6.

Selon une variante de ce mode de mise en oeuvre de l'invention plus élaborée, le débit $d_9$ traversant la zone 1 est réchauffé de 10 à 100 °C de manière à mieux désorber le solvant fort, les autres zones étant maintenues à une température sensiblement constante.

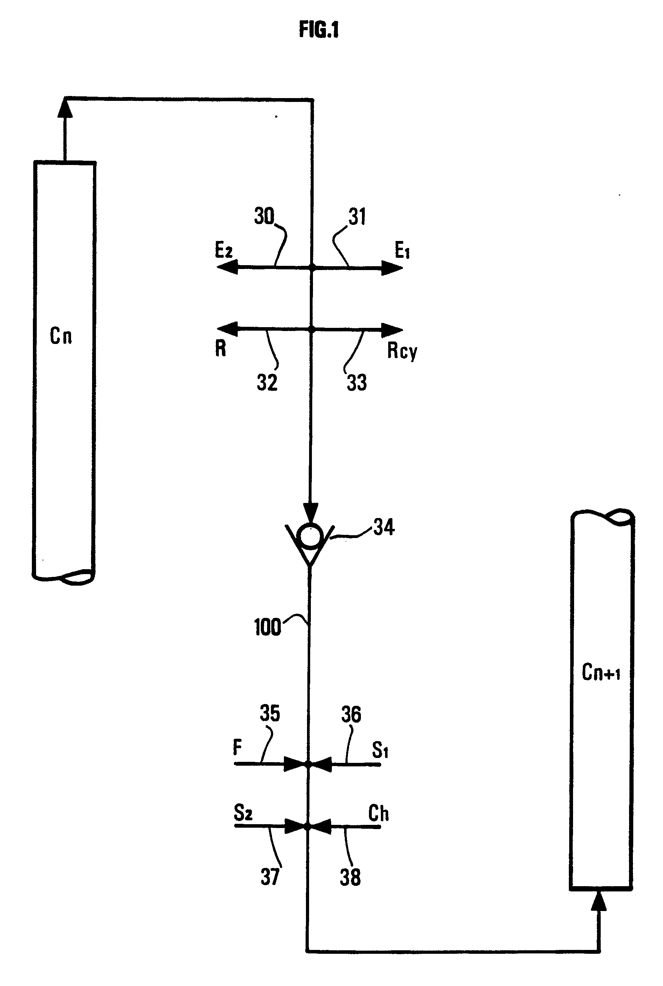

L'invention sera mieux comprise au vu des figures 1,2,3,4,5 et 6 illustrant schématiquement le procédé et le dispositif. Parmi celles-ci, la figure 1 présente le détail d'agencement entre deux sections selon le mode de mise en oeuvre de 1 'invention.

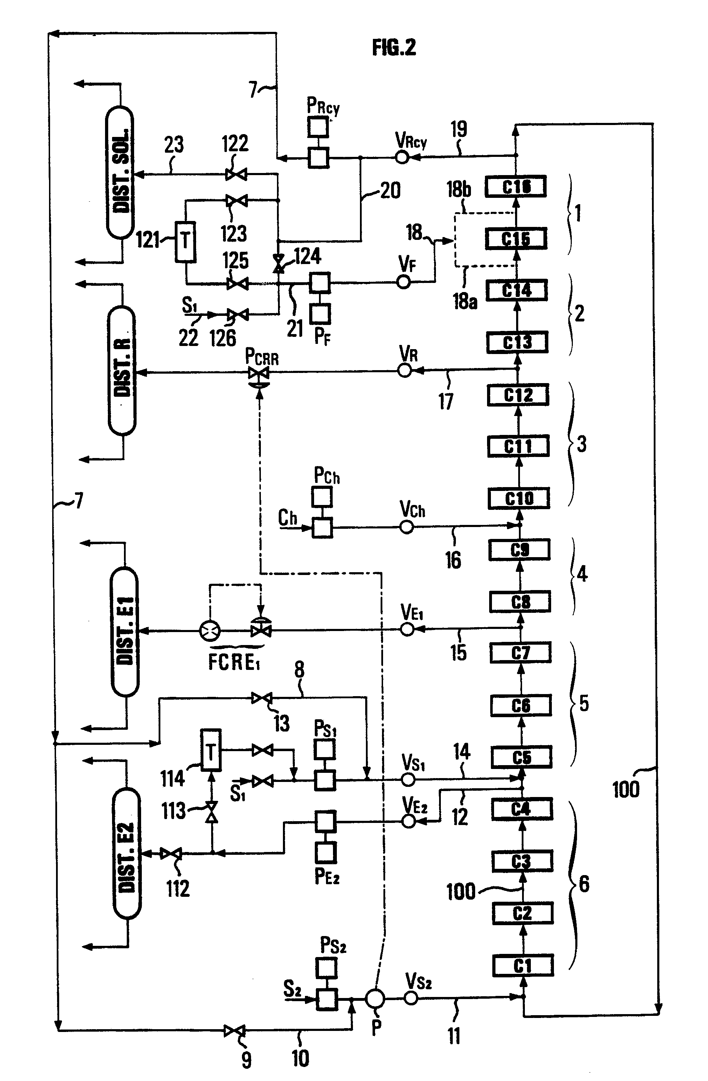

La figure 2 présente le schéma de principe du mode de mise en oeuvre de l'invention, à un instant donné ; on a représenté seize sections réparties de la manière suivante (4 en zone 6, 3 en zone 5, 2 en zone 4, 3 en zone 3, 2 en zone 2, 2 en zone 1). La première période du cycle correspond à l'introduction de solvant fort en section 1 ; le nombre de sections et leur répartition est purement arbitraire.

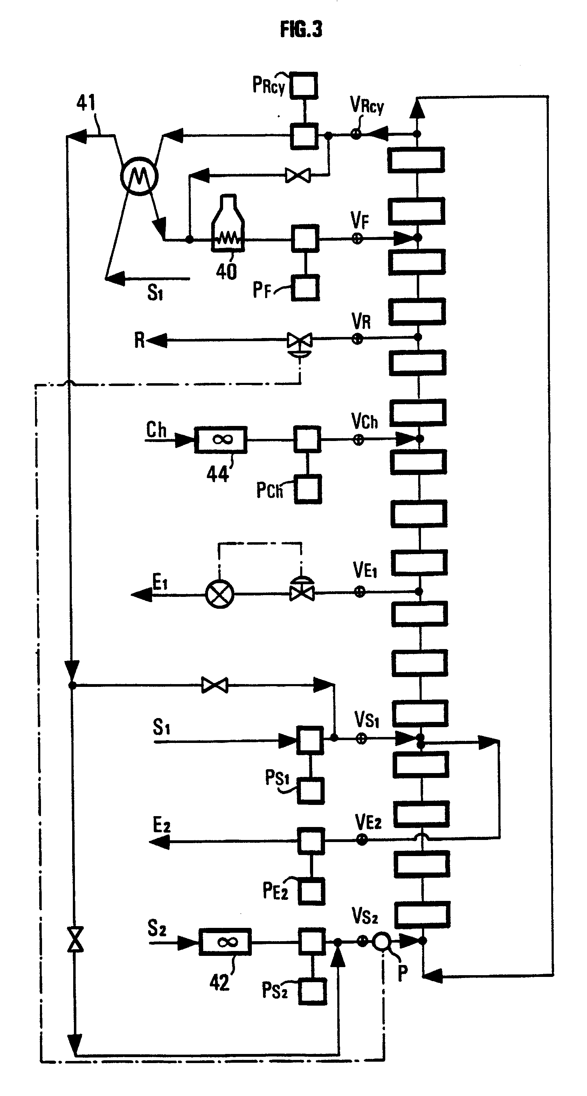

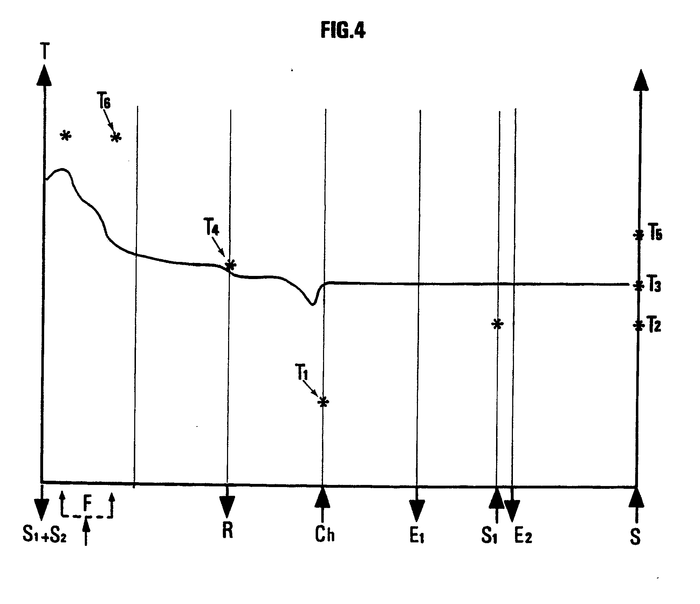

La figure 3 représente la variante de mise en oeuvre de l'invention lorsque le solvant faible envoyé en zone 1 est à une température plus élevée que le reste de l'unité de manière à mieux désorber le solvant fort adsorbé en section 1. La figure 4 représente un profil de température dans lés différentes zones dans ce cas.

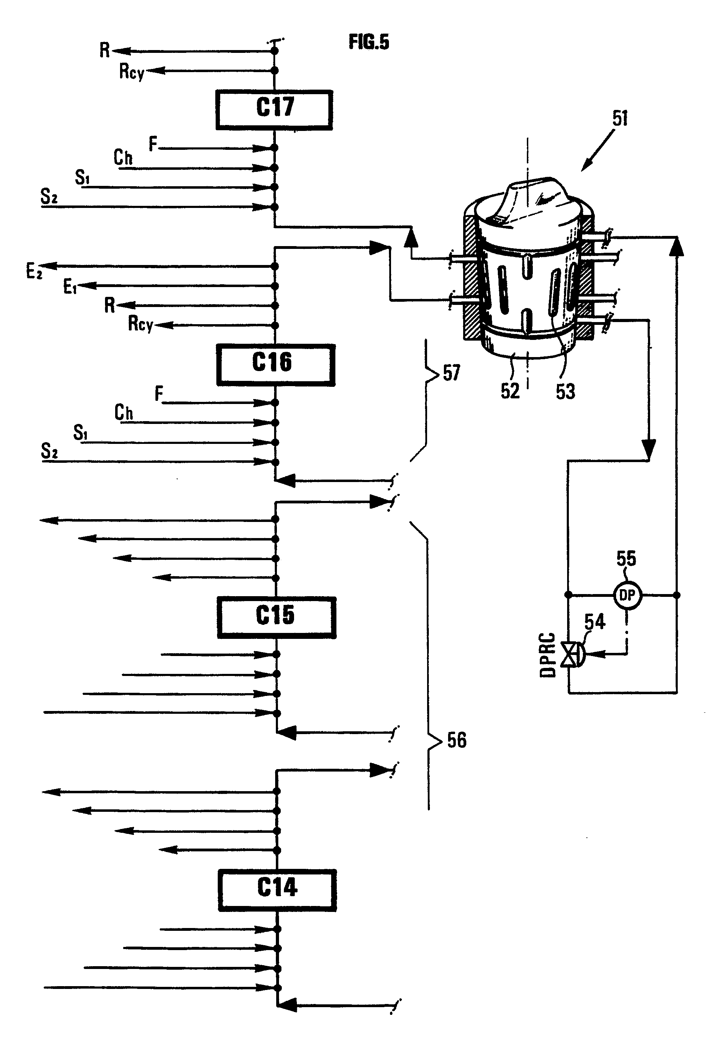

La figure 5 représente une vanne particulière permettant de travailler à des niveaux de pression substantiellement différents entre deux sections successives par exemple lorsque le solvant fort est un fluide largement supercritique alors que le solvant faible est constitué par le méme fluide légèrement sous critique.

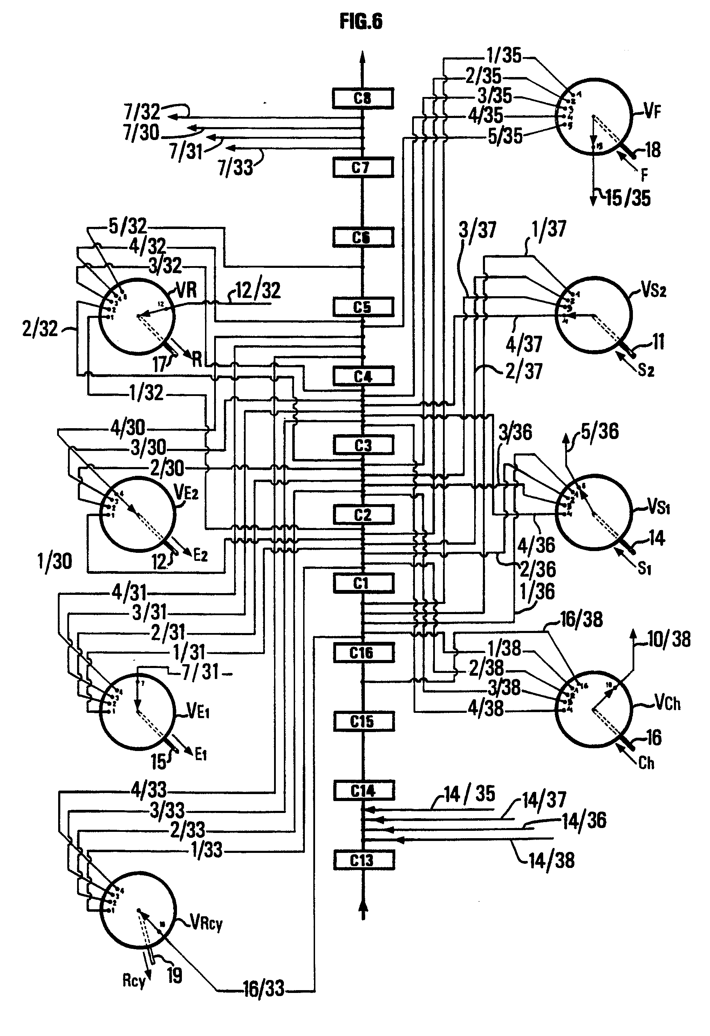

La figure 6 illustre les connexions entre les différentes vannes et les sections de la colonne de séparation.

Comme l'indique la figure 2 le système de séparation par sorption selon l'invention comprend essentiellement des colonnes remplies de particules d'adsorbant solide ou de gel d'adsorbant semi-solide divisé en six zones : zone de désorption par la solvant fort ; du produit le plus fortement adsorbé (5) zone de désorption par le solvant faible du produit moyennement adsorbé, (4) zone de désorption par le solvant faible et le produit moyennement adsorbé du produit peu ou pas adsorbé, les zones (4) et (5) sont également des zones de rétention du produit le plus fortement adsorbé, (3) zone d'adsorption des produits fortement et moyennement adsorbés, (2) zone d'adsorption (ou d'élimination) du produit peu (ou pas) adsorbé, (1) zone de reconditionnement de colonne ou de désorption du solvant fort par le solvant faible.

Les écoulements des divers fluides sont illustrés dans la figure 2. Le solvant fort $S_2$ est pompé au moyen de la pompe PS2. A la sortie de cette pompe on adjoint pendant la première étape de chaque période le courant de recyclage 10 constitué essentiellement de solvant fort. On mesure la pression du courant 11 de manière à la réguler. L'ensemble du solvant fort 11 transite par la vanne VS2 qui permet d'orienter ce flux vers n'importe laquelle des seize sections C1 à C16. Lors de la seconde étape de la période on ne pompe plus que du solvant fort, mais le débit du courant 11 reste constant. Pendant la première période du cycle le courant 11 est envoyé à l'entrée de la section C1, pendant la seconde période on dirigera le flux 11 vers C2 et ainsi de suite jusqu'à la seizième et dernière période du cycle où on l'orientera vers la section C16. A la sortie de la section C4 on prélève un courant 12 (dont le débit est exactement égal à celui du courant 11) au moyen de la vanne VE2 qui permet de sélectionner n'importe laquelle des sorties des seizes sections de colonne ; pendant la première période du cycle on sélectionne la sortie de C4 alors que par exemple pendant la cinquième période on sélectionnera la sortie C9. Le prélèvement du courant 12 est assuré par la pompe PE2. Pendant la première étape de la période le courant 11 constitué essentiellement du solvant faible contenu initialement dans la section C4 est envoyé dans le réservoir tampon 114, la vanne 112 étant fermée, la vanne 113 étant ouverte. Pendant la seconde étape de la période le flux 12 est envoyé vers la distillation E2 où l'on sépare le solvant fort du produit plus fortement adsorbé, la vanne 113 est fermée et la vanne 112 ouverte.

La pompe PS1 approvisionne pendant une première partie de la période le contenu du réservoir tampon 114 et pendant une seconde partie de la période du solvant faible S1. Pendant la première étape de chaque période la vanne (13) est fermée et rien ne transite par la ligne 8 ; au contraire pendant la seconde étape de chaque période on ferme la vanne 9 et l'on ouvre la vanne 13 de façon à ce que le courant de recyclage 7 issu de la zone 1 soit approvisionné par la ligne 8 dans la ligne 14. Le débit dans la ligne 14 est bien entendu constant tout au long de la période. Ce flux transite par la vanne VS1 qui peut desservir n'importe laquelle des seize sections. Pendant la première période du cycle le flux 14 est dirigé vers la section C5 alors que durant la seconde on orientera ce flux vers la section C6 par exemple.

A la sortie de la zone 5, c'est-à-dire à la sortie de section C7, pendant la première période, le flux est divisé en 2. Par la ligne 15 on rejoint la vanne E1 qui peut sélectionner n'importe laquelle des seize sorties de section, la ligne 15 rejoint ensuite le régulateur de débit FCRE1 constitué d'une vanne de laminage pilotée par un débitmètre volumétrique situé immédiatement après, la ligne 15 aboutit finalement dans la colonne à distiller E1 qui sépare le solvant faible du produit moyennement adsorbé. La seconde partie du flux sortant de la zone 5 poursuit son chemin vers la zone 4.

L'entrée dans la zone 4 correspond à l'entrée en section C8 pendant la première période du cycle, alors que par exemple, durant la neuvième période du cycle cette entrée correspondrait à l'entrée en section C1. La sortie de la zone 4 correspond à la sortie de section C9 pendant la première période du cycle.

L'intégralité du flux sortant de la zone 4 transite vers l'entrée de la zone 3 (section C10 en période 1). A ce courant on adjoint par la ligne 16 un flux de charge ou de mélange au moyen de la pompe de charge (p ch) et de la vanne de charge (V ch) capable d'orienter ce flux vers n'importe quelle entrée des seize sections. A la sortie de la zone 3 (correspondant à la fin de la section C12 pendant la 1ère période du cycle), le courant est divisé en deux. Une première partie transite vers la vanne VR capable de sélectionner n'importe laquelle des seize sorties de section puis vers la vanne de régulation P.C.R.R (qui permet de réguler la pression mesurée au refoulement de la pompe PS2 sur la ligne 11) enfin ce flux une fois détendu arrive dans la colonne à distiller Dist. R qui permet de séparer le solvant faible du produit peu ou pas adsorbé. La ligne 17 relie la sortie de la zone 3 à la vanne VR puis à la vanne P.C.R.R. puis la colonne à distiller Dist. R.

La seconde partie du flux issu de la zone 3 continue vers l'entrée de la zone (2) correspondant à l'entrée de la section C13 pendant la première période du cycle, et, par exemple, à l'entrée de la section C15 pendant la troisième période du cycle. L'intégralité du flux quittant la zone 2 c'est-à-dire la section C14 pendant la première période du cycle est envoyée ves la zone (1).

L'entrée en zone (1) correspond au début de la section C15 pendant la première des seize périodes du cycle. Durant la première étape de la période correspondant au balayage du volume mort d'une section, on n'adjoint aucun flux supplémentaire et l'intégralité du flux issu de la zone 1 (section C16 en période 1 du cycle) transite par la ligne 19 vers la vanne VRoy qui peut connecter la ligne 19 vers n'importe laquelle des seize sorties de section, puis vers la pompe PRcy qui renvoie par les lignes 7 puis 10 ce flux vers la ligne 1. Pendant cette première étape les vannes 122, 123, 124, 125 et 126 sont fermées. Durant la seconde étape de la période on opère selon les phases suivantes :

1) Par la ligne 22, la vanne 126 étant ouverte, puis par la ligne 21 (vannes 124 et 125 fermées) on pompe au moyen de la pompe PF du solvant faible qui est orienté par la vanne VF vers l'entrée de la zone (1), ligne 18A (section C15 pendant la première période du cycle). A la sortie de la zone 1 (section C16 pendant la première période) l'intégralité du flux transite par la ligne 19 et la vanne VRcy. Une partie du flux est envoyée au moyen de la pompe de recyclage PRcy à travers la ligne 7, la vanne 13 et la ligne 8 vers la ligne 14. L'autre partie du flux s'écoule à travers la ligne 20 et la vanne 123 vers le réservoir tampon 121, les vannes 122 et 124 étant alors fermées.

2) Lorsque le réservoir tampon 121 est rempli on ferme la vanne 126 et l'on ouvre la vanne 125 et un mélange très riche en solvant faible transite par la ligne 21 vers la pompe PF puis vers la vanne VF qui envoie ce mélange par la ligne 18B à l'entrée de la seconde colonne de la zone (1) (section C16 en période 1). A la sortie de la zone 1 l'intégralité de ce flux transite par la ligne 19 et la vanne VRcy. Une partie du flux est envoyée au moyen de la pompe PRcy à travers la ligne 7, la vanne 13 et la ligne 8 vers la ligne 14. L'autre partie du flux s'écoule à travers la ligne 20 et la vanne 123 vers le réservoir tampon 121, les vannes 122 et 124 étant alors fermées.

3) Durant la denière phase de cette seconde étape le courant transitant par la ligne 20 sort de l'unité, les vannes 123 et 124 sont alors fermées et la vanne 122 ouverte. La ligne 123 peut être dirigée soit vers l'égoût si le solvant faible est de l'eau polluée par des traces de solvant fort de faible valeur vénale, soit vers une colonne à distiller "Dist. Sol" dans les autres cas. Dès qu'une colonne à distiller est employée, on prélève en général par une pompe dans le réservoir tampon 121 un flux constant dirigé vers la colonne à distiller de manière à régulariser le débit d'entrée dans cette dernière.

L'agencement des liaisons entre chaque deux sections de ce mode de mise en oeuvre préféré de l'invention est représenté en figure 6. On considère par exemple la liaison entre deux sections consécutives Cn et Cn + 1. Par exemple entre les sections C6 et C7, ce qui se passe au cours des seize périodes du cycle est décrit plus haut selon la figure 2.

- Période 1 : La jonction C6-C7 se trouve en zone (5), l'intégralité du flux issu de C6 transite vers C7 par la ligne 100 à travers le clapet anti-retour 34, pas de débit dans les lignes 30 à 33 et 35 à 38.

- Période 2 : La jonction C6-C7 se trouve en zone (5), l'intégralité du flux issu de C6 transite vers C7 par la ligne 100 à travers le clapet anti-retour 34, pas de débit dans les lignes 30 à 33 et 35 à 38.

- Période 3 : La jonction C6-C7 coïncide à la jonction des zones (6) et (5) : L'intégralité du flux issu de la section C6 èst évacuée par la ligne 30 qui coïncide dans ce cas avec la ligne 12, débit nul dans les lignes 31 à 33 et dans le clapet anti-retour 34. L'intégralité du flux transitant dans la section C7 entre par la ligne 36 qui se trouve en coïncidence avec la ligne 14, débit nul dans les lignes 35, 37 et 38.

- Périodes 4, 5, 6 : La jonction C6-C7 se trouve en zone (6), l'intégralité du débit transite par le clapet anti-retour 34, aucun débit dans les lignes 30 à 33 et 35 à 38.

- Période 7 : La jonction C6-C7 coïncide à la jonction des zones (1) et (5) : l'intégralité du flux issu de la section C6 est évacuée par la ligne 33 qui coïncide dans ce cas avec la ligne 19, débit nul dans les lignes 30 à 32, et dans le clapet anti-retour 34. La totalité du flux transitant dans la section C7 entre par la ligne 37 qui se trouve en coïncidence avec la ligne 11, débit nul dans les lignes 35, 36 et 38.

- Période 8 : La jonction C6-C7 se trouve en zone 1. Pendant la première étape et la première partie de la seconde étape de la période l'intégralité du flux issu de C6 transite vers C7 à travers le clapet anti-retour 34, les lignes 30 à 33 et 35 à 38 supportent aucun débit. Durant la fin de la seconde étape de la période, l'intégralité du flux issu de C6 transite vers C7 à travers le clapet anti-retour 34, débit nul dans les lignes 30 à 33, à l'entrée de la section C7 on adjoint par la ligne 35 qui coïncide alors avec la ligne 18B un courant de rinçage, débit nul dans les lignes 36 à 38.

- Période 9 : La jonction C6-C7 se trouve en coïncidence avec la jonction des zones (2) et (1). Pendant la première étape et la fin de la deuxième étape de la période, l'intégralité du flux issu de la section C6 transite vers C7 à travers le clapet anti-retour 34, débit nul dans les lignes 30 à 33 et 35 à 38. Durant le début de la seconde étape de la période l'intégralité du flux issu de la section 6 transite à travers le clapet anti-retour 34, débit nul dans les lignes 30 à 33, à l'entrée de la section C7 on adjoint par la ligne 35 qui coïncide alors avec la ligne 18A un courant de rinçage constitué de solvant faible pur, débit nul dans les lignes 36 à 38.

- Période 10 : La jonction C6-C7 se trouve en zone (2) : transit de la totalité du flux à travers 34, débit nul dans les lignes 30 à 33 et 35 à 38.

- Période 11 : La jonction C6-C7 coïncide avec la fonction des zones (3) et (2) ; une partie du flux issu de la section C6 est évacuée par la ligne 32 qui correspond alors à la ligne 17, débit nul dans les lignes 30, 31 et 33, la seconde partie du flux issu de C6 transite à travers 34 vers la section C7, débit nul dans les lignes 35 à 38.

- Périodes 12 et 13 : La jonction des sections C6 et C7 se trouve en zone (3) : transit de la totalité du flux à travers 34, débit nul dans les lignes 30 à 33 et 35 à 38.

- Période 14 : La jonction des sections C6 et C7 correspond à la jonction des zones (4) et (3). L'intégralité du flux issu de la section C6 transite à travers 34, débit nul dans les lignes 30 à 33. Par la ligne 38 qui se trouve alors coïncider avec la ligne 16 on adjoint un courant de charge au flux entrant en section C7, débit nul dans les lignes 35 à 37.

- Période 15 : La jonction des sections C6 et C7 se trouve en zone (4) : transit de la totalité du flux à travers 34, débit nul dans les lignes 30 à 33 et 35 à 38.

- Période 16 : La jonction des sections C6 et C7 coïncide à la jonction des zones (5) et (4) : une partie du flux issu de la section C6 est évacuée par la ligne 31 qui correspond alors à la ligne 15, débit nul dans les lignes 30, 32 et 33 ; la seconde partie du flux issu de C6 transite à travers 34 vers la section C7, débit nul dans les lignes 35 à 38.

A la fin de la seizième période le cycle se trouve bouclé et le dernier mouvement des vannes VS2, VE2, VS1, VE1, Vch, VR, VF et VRcy ramène la jonction C6-C7 dans sa configuration initiale : un nouveau cycle commence alors.

Les figures 3 et 4 représentent une variante du mode préféré de mise en oeuvre de l'invention.

La figure 4 représente un exemple de profil de températures souhaitables dans les six zones caractérisant le procédé. Les moyens d'obtenir ce genre de profil (isotherme dans les zones (2) à (6) et température nettement plus élevée en zone (1)) varient suivant le diamètre des colonnes, typiquement pour des colonnes de faible diamètre ($d \leq 5$ cm) il est préférable d'imposer la température de l'extérieur par exemple au moyen de circulation de fluide caloporteur dans des sections à double enveloppe ou par des enroulements de résistances autour des colonnes. Par contre pour des colonnes de diamètre important il est préférable de réguler la température des différents flux.

La figure 3 reprend la figure 2 de façon simplifiée mais en montrant en plus le four 40, l'échangeur 41, et les réfrigérants 42 à 44. Le solvant faible de rinçage entrant en zone (1) se réchauffe dans l'échangeur 41, au contact du courant de recyclage issu de la zone 1 et transitant à travers les lignes 7 puis 11 vers la zone 2 durant la seconde étape de chaque période, il atteint la température d'introduction T6 dans l'unité par le moyen du four 40. A la fin de la seconde étape de chaque période le flux de rinçage recyclé depuis le réservoir tampon 121 transite aussi par le four 40 pour atteindre la température T6. Le flux quittant la zone (1) et recyclé, soit vers la zone (6) pendant la première étape de chaque période et vers la zone (5) pendant la seconde étape de chaque période, se trouve en moyenne à la température T5 avec T5 < T6 puisque la dernière section de la zone (1) qui se trouvait en zone 6 au cours de la période précédente doit se réchauffer. A l'entrée de la zone (1) pendant la première étape de chaque période on approvisionne le courant de recyclage issu de la zone 1 à une température variable supérieure à T3 la température moyenne dans les zones (2) à (6). On y adjoint un courant de solvant fort à une température T2 variable régulée par exemple au moyen du réfrigérant 42 de manière à ce que le flux entrant en zone 1 par la ligne 11 se trouve à la température T3. Pendant cette première étape de la période le courant de solvant faible entrant en zone (5) par la ligne 14 est approvisionné à la température T3 et le réfrigérant 43 est alors bypassé. Pendant la seconde étape de chaque période, le courant de recyclage issu de la zone 1 est envoyé vers la zone (5) à une température variable supérieure à T3, on y adjoint un courant de solvant faible à une température T2 variable régulée au moyen du réfrigérant 43 de manière a ce que le flux entrant en zone (5) par la ligne 14 se trouve à la température T3. Pendant cette seconde étape de la période le courant de solvant fort entrant en zone (6) par la ligne 11 se trouve à la température T3 et le réfrigérant 42 est alors bypassé. D'autre part à chaque changement de période une section chaude qui était en zone (1) se retrouve en zone (2) ; la partie du flux issu de la zone (3) (température légèrement supérieure à T3) se trouve donc réchauffée au contact de l'adsorbant chaud de sorte que la température moyenne en zone (2) est T4 avec T4 > T3. Les températures moyennes en zone (2) et en zone (3) sont contrôlées par la température T1 d'introduction de la charge en zone (3) (ligne 16). La charge transite donc par le réfrigérant 44 de manière à ce que la température moyenne en zone (3) soit T3, de ce fait T1 se trouve être inférieure à T3. Suivant la température à laquelle le solvant fort, le solvant faible et la charge se trouvent disponibles ainsi que suivant les températures T3 et T6 visées, les réfrigérants 42, 43, 44 peuvent être, non pas des réfrigérants, mais des moyens de chauffage, de même le four 40 peut être un échangeur ou un réfrigérant. D'une manière générale les appareils 40 à 44 sont des moyens de régulation de la température permettant d'assurer une température à peu près constante dans les zones (2) à (6) et une température plus élevée dans la zone (1).

La figure 5 représente une vanne se rapportant à une autre variante de mise en oeuvre de l'invention. Il s'agit ici d'avoir une zone 6 avec un niveau de pression beaucoup plus élevé que dans les autres zones. Dans le cas du mode de mise en oeuvre préféré de l'invention on pourra réduire cet écart de pression en adjoignant au fluide éluant un "entraîneur" approprié tel que par exemple le méthanol. La vanne 51 décrite en figure 5 s'insère juste en amont ou en aval du clapet anti-retour 34 (fig. 1). Seules les sections 13 et 17 ont été représentées. Dans la position représentée les sections 13 à 15 se trouvent en zone de haute pression 56 tandis que les colonnes 16 et 17 se trouvent en zone de basse pression. L'écoulement entre les sections 13 et 14, 14 et 15 et 16 et 17 s'effectue comme à travers un simple tuyau de liaison tandis qu'entre les sections 15 et 16 une vanne de régulation de pression 54, un régulateur et un capteur de pression différentiel 55 permettent de réguler une différence de pression entre les zones amont 56 et aval 57. Lorsque cette vanne tourne d'une position dans le sens des aiguilles d'une montre, c'est à la jonction des zones 16 et 17 que la différence de pression sera régulée. Bien entendu pour créer une telle zone de haute pression il faudra prélever à la fin de la zone par la vanne de recyclage un courant de recyclage dont la pression sera augmentée au moyen de la pompe de recyclage et/ou envoyer par la vanne de solvant fort S1 du solvant fort à une pression adéquate. Le boisseau 52 de vanne 51 représenté permet donc un simple écoulement interne 53 au boisseau conique 52 dans toutes les positions sauf une. Dans une position particulière le flux entrant dans la vanne est dirigé vers une boucle externe de régulation de pression différentielle 54 et 55 puis le fluide détendu retransite par la vanne vers la sortie correspondante.

La figure 6 représente un schéma détaillé du procédé selon la mise en oeuvre de l'invention représentée en figures 1 et 2. La numérotation des lignes combine celles des figures 1 et 2. Ainsi le prélèvement d'extrait au solvant fort correspond toujours au suffixe 30, le prélèvement d'extrait au solvant faible correspond toujours au suffixe 31, le prélèvement de raffinat correspond toujours au suffixe 32, le prélèvement du courant de recycle correspond toujours au suffixe 33, l'adjonction du courant de rinçage correspond toujours au suffixe 35, l'adjonction de solvant faible correspond toujours au suffixe 36, l'adjonction de solvant fort au suffixe 37, et enfin l'adjonction du courant de charge au suffixe 38. D'autre part les préfixes indiquent le numéro de la section vers laquelle un courant va rentrer où de laquelle il est sorti. Par exemple, la ligne 3/36 désigne la liaison entre la vanne de solvant faible VS1 et l'entrée en section C3, la ligne 1/31 désigne la liaison entre la sortie de la section C1 et la vanne d'extrait au solvant faible VE1.

De plus, l'entrée commune de la vanne de charge s'appelle toujours 16, l'entrée commune de la vanne de solvant faible s'appelle toujours 14, l'entrée commune de la vanne de solvant fort s'appelle toujours 11, l'entrée commune de solvant faible de rinçage s appelle toujours 18, tandis que les sorties communes des vannes de raffinat, d'extrait au solvant fort, d'extrait au solvant faible et de recyclage s'appellent toujours respectivement 17, 12, 15 et 19.

Ainsi dans les commentaires des figures 1 et 2 lorsque nous disons qu'en période 3 la jonction C6-C7 correspond à la jonction zone (6), zone (5) et que de ce fait les lignes 30 et 12 se trouvent en coïncidence il faut comprendre que la vanne VE2 met en communication les figures 6/30 et 12 et qu'ainsi la ligne 12 se trouve, pendant le temps de cette 3ème période, prolongée jusqu'à la sortie de la zone 6. D'après cette figure on comprend aisément que pour 16 sections et 8 vannes tournantes, 128 lignes de ce type relient chaque section à chaque vanne.

Les exemples suivants illustrent l'invention à titre non limitatif :

Exemple 1

Une charge composée de 41 % de métaxylène, 22 % d'orthoxylène, 18 % d'éthyl benzène et 19 % de paraxylène est traitée sur une zéolithe échangée partiellement en potassium et partiellement en baryum (environ 50 % - 50 % exprimé en normalité)par un solvant faible : le benzène et par un solvant fort le para méthyl éthyl benzène. Le schéma de traitement est identique à celui de la figure 2. Les seize sections ont les dimensions suivantes : diamètre 5 cm, longueur 100 cm. La durée totale du cycle est de 8 h, chaque période dure donc 30 minutes. Le tableau 1 donne les débits à l'entrée, à l'intérieur et à la sortie de chaque zone. Le tableau 2 donne les compositions moyennes des entrées et des sorties de chaque zone sur une période de 24 h (trois cycles complets) après une période de mise en régime de 10 cycles (80 h.).

Le prélèvement du courant de rinçage vers la distillation de solvant n'intervient qu'à la fin de la première période. On observe expérimentalement des variations de densité non négligeables à la sortie des dernières sections des zones (6) et (1). On fait varier légèrement le débit de sortie en zone (6) de manière à maximiser la teneur en paraxylène dans l'extrait 2. Dans cet exemple la température reste constante à 135° Celcius.

EP 0 415 821 A1

## Tableau 1

| Zone (6) | Zone (5) | Zone (4) | Zone (3) | Zone (2) | Zone (1) |
|---|---|---|---|---|---|
| | | E N T R E E S | | | |
| $0\ min < t < 20\ min$ Recyclage depuis zone (1) 2,625 1/h  Solvant fort 1,025 1/h  $20\ min < t < 30\ min$ Solvant fort 3,65 1/h | $0\ min < t < 20\ min$ depuis réservoir tampon 2,58 1/h  Solvant faible 0,97 1/h  $20\ min < t < 30\ min$ Recyclage depuis zone (1) 2,49 1/h  Solvant faible 1,06 1/h | $\dfrac{0\ min\ \ t}{30\ min}$ depuis zone (5)  2,625 1/h | $\dfrac{0\ min\ \ t}{30\ min}$ depuis zone (4)  2,625 1/h  charge  0,45 1/h | $\dfrac{0\ min\ t}{30\ min}$ depuis zone (3)  2,625 1/h | $0\ min < t < 20\ min$ depuis zone (2)  2,625 1/h  $20\ min < t < 25\ min$ depuis zone (2) 2,625 1/h  Solvant faible 6,3 1/h  $25\ min < t < 30\ min$ Depuis zone (2) 2,625 1/h Depuis tampon vers la 2e section 6,3 1/h |
| | | T R A N S I T | | | |
| $0\ min < t < 30\ min$  3,65 1/h  (variant légèrement avec densité) | $0\ min < t < 30\ min$  3,55 1/h | $0\ min < t < 30\ min$  2,625 1/h | $0\ min < t < 30\ min$  3,075 1/h | $0\ min < t < 30\ min$  2,625 1/h | $0\ min < t < 20\ min$ 2,625 1/h $20\ min \leqslant t < 25\ min$ 8,925 1/h $25\ min \leqslant t \leqslant 30\ min$ 2,625 1/h 1ère col. 8,925 1/h 2ème col. |

13

Tableau 1 (suite et fin)

| Zone (6) | Zone (5) | Zone (4) | Zone (3) | Zone (2) | Zone (1) |
|---|---|---|---|---|---|
| | | SORTIES | | | |
| 0 min < t < 14 min 10 sec 3,64 1/h (d = 0,869) Vers R Tampon<br><br>14 min 10 sec<t<30 min 3,659 1/h (d = 0,865) Vers Dist. E2 | 0 min<t < 30 min<br><br>2,625 1/h Vers zone (4)<br><br>0,925 1/h Vers Dist. E1 | 0 min < t<30 min 2,625 1/h Vers zone (3) | 0 min < t<30 min 2,625 1/h Vers zone (2) 0,45 1/h Vers Dist. Raf. | 0 min < t<30 min 2,625 1/h Vers zone (1) | 0 min<t<20 min<br><br>2,625 1/h Vers zone (6)<br><br>20 min< t < 30 min<br><br>2,49 1/h Vers zone (5) 6,435 1/h Vers tampon |
| | | | | | 0 min < t < 30 min 1,095 1/h de tampon vers Dist. Solv. |

Tableau 2

| | Orthoxylène | Métaxylène | Ethylbenzène | Paraxylène | Benzène | Para-Mét-Ethyl-Benzène | Total | |
|---|---|---|---|---|---|---|---|---|
| **Bilan matière sur 24 h** | | | | | | | | |
| | % p | % p | % p | % p | % p | % p | g | l |
| Entrées | | | | | | | | |
| Lavage (benzène) | - | - | - | - | 99,99 | - | 22142,0 | 25,2 |
| Benzène | - | - | - | - | - | 99,97 | 21087,1 | 24,01 |
| Para Mét. Et. Benzène | - | - | - | - | - | - | 39279,8 | 45,6 |
| Charge | 22,31 | 40,86 | 17,98 | 18,85 | - | - | 9373,25 | 10,8 |
| Total (g) | 2091,4 | 3829,5 | 1685,4 | 1767,0 | 43229,1 | 39279,8 | 91882,1 | 105,6 |
| Sorties | % p | % p | % p | % p | % p | % p | g | l |
| Raffinat | 22,08 | 40,38 | 0,145 | 0,055 | 36,90 | 0,44 | 9427,6 | 10,800 |
| Extrait 1 (Bz) | 0,045 | 0,09 | 8,50 | 0,13 | 89,86 | 1,38 | 19460,0 | 22,18 |
| Extrait 2 (PMBz) | 0,0025 | 0,013 | 0,044 | 4,35 | 2,32 | 93,27 | 39903,7 | 46,30 |
| Lavage | - | - | - | - | 92,47 | 7,53 | 23038,6 | 26,26 |
| Total (g) | 2091,37 | 3829,57 | 1685,33 | 1766,3 | 43195,1 | 39263,0 | 91829,9 | 105,5 |
| Pertes (g) | - 0,03 | + 0,07 | - 0,07 | 0,7 | - 34,0 | - 16,8 | 52,2 | 0,06 |

Exemple 2
===

A la charge de l'exemple précédent on ajoute 0,15 % poids de β picoline (3 méthyl pyridine), ce produit est très difficilement séparable des xylènes par distillation (T Eb. = 144°) et de plus très fortement adsorbé sur la zéolithe employée. On établit le fonctionnement de l'unité avec les mêmes débits que précédemment, sauf que la charge est introduite à raison de 10,815 litres par jour pour tenir compte de l'ajout de 0,15 % de β picoline. Lorsque l'on répète l'expérience de l'exemple n° 1 (10 cycles de mise en régime et bilan matière sur les trois cycles 11, 12 et 13) on ne détecte que 25 ppm de β picoline dans l'extrait 2. Après distillation du benzène puis du "paraxylène" on arrive à un extrait 2 séparé de composition orthoxylène 0,057 %, métaxylène 0,29 %, éthyl benzène 0,99 %, paraxylène 98,64 %, β picoline 0,059 % (590 ppm) : on constate donc qu'à ce stade plus de 92 % de la β picoline s'accumule sur la phase fixe. En analysant en fonction du temps la pureté des différents effluents on constate une nette dégradation, de plus sur le bilan matière fait sur l'ensemble des cycles 51, 52, 53 on constate qu'encore plus de 62 % de la β picoline s'accumule sur la phase fixe. Les compositions sont les suivantes :

Raffinat : β picoline 11 ppm, orthoxylène 22,02 %, métaxylène 40,22 %, éthyl benzène 0,46 %, paraxylène 0,11 %, benzène 36,51 %, para méthyl éthyl benzène 0,66 %.

Extrait 1 : orthoxylène 0,03 %, métaxylène 0,06 %, éthyl benzène 8,37 %, paraxylène 0,31 %, benzène 89,33 %, para méthyl éthyl benzène 1,41 %, β picoline 57 ppm.

Extrait 2 : orthoxylène 0,001 %, métaxylène 0,005 %, éthyl benzène 0,02 %, paraxylène 4,24 %, benzène 2,50 %, para méthyl éthyl benzène 93,23 %, β picoline 95 ppm.

Lavage : orthoxylène 0,04 %, métaxylène 0,08 %, éthyl benzène 0,03 %, paraxylène 0,01 %, benzène 92,34 %, para méthyl benzène 7,56 %, β picoline 13 ppm.

A ce stade on peut estimer qu'environ 200 g de β picoline s'est accumulée sur la phase fixe. Pour désorber ce produit sans arréter l'unité on travaille en mode non isotherme. Compte tenu de la petite taille des équipements et de l'absence de régulation de température extérieure colonne par colonne (toutes les colonnes et les vannes sont placées dans une étuve thermostatée à 139°C, on est obligé d'amplifier les différences de températures des différents fluides entrant dans l'unité. Ainsi le benzène de lavage est chauffé à 185°C pour assurer une température maximale de l'ordre de 170°C en zone (1) tandis que la charge est approvisionnée à 110°C et le para méthyl éthyl benzène à 125°C de manière à ce que les températures en zone (2) à (6) soient à 3°C près à 135°C. On maintient ces conditions pendant 9 cycles (54 à 63) (72 h) et l'on dose à intervalle de 3 h la β picoline dans les quatre effluents. Après 51 h on ne détecte plus de β picoline dans le raffinat (limite de détection 2 à 3 ppm) et après 72 h on ne détecte plus que 3 ppm de β picoline dans l'extrait 1. Dans l'extrait 2 la teneur en β picoline reste à peu près constante entre 90 et 100 ppm pendant 45 h puis décroît régulièrement pour atteindre une valeur de l'ordre de 40 ppm au bout de 72 h

De manière spectaculaire la teneur en β picoline dans le courant de lavage augmente très vite pour atteindre environ 1520 ppm au bout de 24 h. A ce stade on arrête de recycler le courant de lavage et l'on approvisionne donc deux fois plus de benzène de lavage. De manière inattendue la teneur en β picoline dans le courant de lavage ne baisse que légèrement, 1435 ppm au bout de 27 h et 1410 ppm au bout de 30 h tandis que comme on pouvait s'y attendre la teneur en para méthyl éthyl benzène dans ce courant passe d'environ 7,5 % lorsque l'on recycle ce courant à 3,85 % lorsque l'on cesse de recycler. Au bout de 57 h la teneur en β picoline dans ce courant est encore de 1010 ppm. Cette valeur baisse ensuite régulièrement à 890 pm, 680 ppm, 460 ppm, 290 ppm et 125 ppm après 60 h, 63 h, 66 h, 69 h et 72 h. A ce moment on estime avoir désorbé environ 170 g de β picoline. On revient alors aux conditions initiales de marche et un nouveau bilan est fait sur les cycles 65, 66 et 67 : on constate que la pureté des différents effluents s'est presque complètement restaurée puisque les analyses suivantes sont obtenues :

Raffinat :β picoline : non détectable, orthoxylène 22,10 %, métaxylène 40,35 %, éthyl benzène 0,16 %, paraxylène 0,05 %, benzène 36,88 %, para méthyl éthyl benzène 0,46 %.

Extrait 1 :β picoline 3 ppm, orthoxylène 0,04 %, méthaxylène 0,1 %, éthyl benzène 8,48 %, paraxylène 0,14 %, benzène 89,85 %, para méthyl éthyl benzène : 1,39 %.

Extrait 2: β picoline 46 ppm, orthoxylène 0,002 %, méthaxylène 0,01 %, éthyl benzène 0,045 %, paraxylène 6,35 %, benzène 2,34 % ; para méthyl éthyl benzène : 93,25 %.

Lavage :β picoline : non détectable, orthoxylène non détectable, métaxylène 0,005 %, éthyl benzène non détectable, paraxylène non détectable, benzène 92,45 %, para méthyl éthyl benzène 7,54 %.

Pendant ces trois cycles on estime qu'environ 85 % de la β picoline rentrée s'est accumulée.

Exemple 3

Il est connu de par la pratique industrielle de séparation des sucres sur résine échangeuse d'ion sous forme calcique (procédé I.W.T. et Mitsubishi Chemicals pour la séparation glucose fructose et Finnsugar pour la séparation Xylose Arabinose) qu'une légère perte, en continu, de calcium probablement due à la présence de traces d'ions Fer dans les charges à séparer provoque une désactivation progressive de la résine, ce qui oblige périodiquement à arréter l'unité pour régénérer la résine par 1°) un lavage acide pour la passer sous forme $H^+$ et 2°) par un échange avec une solution concentrée de chlorure de calcium.

On veut donc séparer sur une résine échangeuse d'ions (sous forme calcique) un mélange de 12 % de glucose, 78,5 % de xylose et 9,5 % poids d'arabinose en solution aqueuse à 400 g.l.$^{-1}$ de matières sèches. On opère conformément à une variante du schéma de principe de la figure 1. Le solvant de rinçage est constitué successivement d'une solution d'HCl 0,005 M d'une solution de chlorure de calcium à 150 ppm poids puis d'eau permutée. Le solvant fort est constitué de la manière suivante : le courant de recyclage issu de la zone (1) a une teneur résiduelle moyenne en chlorure de calcium de 40 ppm poids, tandis que l'appoint est constitué par de l'eau permutée.

La température moyenne en zone (6) est de 75°C. Le solvant faible est constitué d'eau permutée, la température moyenne dans les zones (2) à (5) est de 35°C. On dispose de 24 colonnes à double enveloppe et la température est imposée par une circulation d'eau extérieure. Ces colonnes d'un diamètre intérieur de 1,6 cm et d'une longueur de 1 m présentent la particularité d'étre compressées axialement pour s'adapter aux variations de volume apparent de la phase fixe (qui peuvent atteindre 2,8 %). Chaque période dure 37 minutes, 30 secondes. Le cycle complet de 24 périodes dure donc 15 h.

A titre d'exemple on décrit seulement la première période du cycle brièvement. Pendant cette première période la zone (6) est constituée des cinq premières colonnes C1 à C5 thermostatées à 75°C. Pendant une première étape de chaque période (durée 33 min, 09 sec) on envoie en colonne C1 un courant de recyclage issu soit directement de la zone (1) soit provenant d'un réservoir tampon (débit 3,2250 cm³/min), ainsi qu'un appoint d'eau permutée (débit 1,415 cm³/min). Pendant une seconde étape de chaque période (de 33 min 10 sec à 37 min 30 sec), on envoie de l'eau permutée à raison de 4,64 cm³/min. Pendant toute la durée de la période le débit en zone (6) est de 4,64 cm³/min. A la sortie de la colonne 5 (de t = 0 à t = 7 min 12 sec) on prélève l'intégralité de ce flux pour l'envoyer vers un réservoir tampon (ce temps correspond au fait que la température de sortie de la colonne 5 met un peu plus de 7 minutes pour passer de 35°C à 60°C) Pendant le reste de la période on produit un flux (Extrait 2 : 4,64 cm³/min) dont la composition moyenne est la suivante : xylose 0,24 g.l$^{-1}$. Arabinose 1,90 g.l$^{-1}$, calcium environ 25 ppm poids de CaCl$_2$.

Pendant la période 1 la zone 5 est constituée des colonnes 6 à 10 thermostatées à 35°C. Pendant une première partie de la période (de t = 0 à t = 8 min 19 sec) on introduit en colonne 6 l'intégralité du liquide contenu dans le réservoir tampon à raison de 4 cm³/min. Pendant une seconde partie de la période (de t = 8 min 20 sec à t = 33 min 10 sec) on introduit de l'eau permutée à raison de 4 cm³/min, enfin, (de t = 33 min 11 sec à t = 37 min 30 sec on introduit le courant de recyclage issu de la zone 1 3,225 cm³/min ainsi qu'un appoint d'eau permutée de 0,775 cm³/min. A l'intérieur de la zone 5 le débit constant a pour valeur 4 cm³/min. A la sortie de cette zone on prélève un courant Extrait 1 de 0,746 cm³/min dont la composition est la suivante, glucose 0,98 g.l$^{-1}$, xylose 87,4 g/l$^{-1}$, arabinose 1,34 g.l$^{-1}$, environ 6 ppm de calcium sous forme Ca(OH)$_2$.

Durant la période 1 la zone (4) est constituée des colonnes 11 à 14 thermostatées à 35°C. A l'entrée de cette zone on approvisionne un courant de 3,254 cm³/min issu de la zone 5. Ce courant constant est dirigé à la sortie de la zone (4) vers l'entrée de la zone (3).

Durant la période 1 la zone (3) est constituée des colonnes 15 à 18 thermostatées à 35°C. A l'entrée de cette zone on ajoute au courant de recyclage de 3,254 cm³/min issu de la zone 4 un courant de charge de 0,213 cm³/min de composition xylose 314 g.l$^{-1}$, glucose 48 g.l$^{-1}$, arabinose 38 g.l$^{-1}$. Le débit à l'intérieur de la zone (3) est de 3,467 cm³/min de la zone (3). On prélève un flux de raffinat 0,242 cm³/min dont la composition est la suivante glucose 39,8 g.l$^{-1}$, xylose 4,08 g.l$^{-1}$, calcium 6 ppm poids sous forme Ca(OH)$_2$.

Pendant la période 1 la zone 2 est constituée des colonnes 19 et 20 thermostatées à 35°C. A l'intérieur de cette zone transite un débit constant de 3,225 cm³/min ; ce courant en provenance de la zone (3) transite vers la zone (1).

Pendant la période 1 la zone (1) est constituée des colonnes 21 à 24. Pendant une première partie de la période de t = 0 à t = 4 min, on injecte en colonne 24 3,225 cm³/min d'HCl 0,005 N. Pendant une seconde partie de la période t = 4 min à t = 12 min on injecte également en colonne 24 3,225 cm³/min d'une solution à 150 ppm poids de CaCl$_2$. Pendant une troisième partie de la période on injecte en colonne

3,225 cm³/min d'eau permutée (de t = 12 min à t = 24 min), enfin de t = 24 min à t = 37 min 30 sec. On prélève du réservoir tampon situé à la sortie de la zone (6) un courant de 3,225 cm³/min qui est également réinjecté en colonne 21. Le débit à l'intérieur de la zone (6) est donc au total de 6,45 cm³/min : 3,225 cm³/min transitent depuis la zone (2) et 3,225 cm³/min ajoutés dans la zone (6).

A la sortie de la zone (1) pendant une première partie de la période (t = 0 à t = 12 min) on envoie au moyen de la vanne de recyclage 6,45 cm³/min de liquide vers le réservoir tampon. La moitié de ce débit soit 3,225 cm³/min est prélevé et renvoyé vers la zone (6). Pendant une seconde partie de la période (de t = 12 min à t = 24 min) le liquide sortant de la colonne 24 est envoyé à l'égoût, tandis que le contenu du réservoir tampon est envoyé à raison de 3,225 cm³/min vers la zone (6). Pendant une troisième partie de la période (t = 24 min à t = 33 min 10 sec) 6,45 cm³/min de liquide sont à nouveau envoyés vers le réservoir tampon : la moitié de ce débit est envoyée vers la zone (6) et l'autre moitié vers la colonne 21. Enfin de t = 33 min 10 sec à la fin de la période 1, les 6,45 cm³/min sortant de la colonne 24 sont dirigés vers la zone (5) et l'autre moitié recyclée vers l'entrée de la zone (1) : colonne 21.

Pour prouver l'efficacité du traitement effectué en zone 1 on a comparé avec le même type de fonctionnement où la zone 1 n'existe pas (la zone 2 comprend alors les colonnes 19 à 24) : les puretés des effluents sont légèrement plus faibles et surtout au bout de 350 cycles on est obligé d'arrêter l'unité pour régénérer la résine (le taux d'impuretés dans chaque effluent a en moyenne triplé). Avec la marche décrite dans cet exemple on ne note aucune modification des compositions de différents effluents après 1200 cycles de fonctionnement.

## Revendications

1 - Procédé de séparation en continu et en phase fluide d'un mélange ou charge, d'au moins trois constituants en trois fractions, dans lequel on fait circuler un fluide comprenant ledit mélange et du solvant à cocourant sur un sorbant contenu dans au moins une colonne de séparation présentant à intervalles réguliers d'espace, des entrées d'alimentation d'au moins une partie du fluide circulant en aval de ces entrées, des sorties de soutirage d'au moins une partie du fluide circulant en aval de ces entrées, ladite colonne présentant une liaison ou boucle de circulation externe du fluide entre une extrémité amont et une extrémité aval, on fait se déplacer à cocourant les dites sorties de soutirage et les entrées d'alimentation dans des conditions dites à contre-courant simulé, les constituants présentant vis-à-vis du sorbant et du solvant des degrés de forte, moyenne et faible adsorption relative,

le procédé étant caractérisé par la combinaison des étapes suivantes :

a) On détermine 6 zones contiguës 1,2,3,4,5 et 6 ayant des fonctions distinctes et étant connectées en série entre elles de sorte que les dites zones et la liaison externe assurent une continuité,

b) On détermine une zone 1 de reconditionnement du sorbant de la colonne, ladite zone étant définie par une quantité d'adsorbant localisée entre une entrée d'un courant de rinçage à son extrémité amont et une sortie d'un courant de recylage à son extrémité aval,

c) On détermine une zone 2 d'adsorption du ou des constituants les moins adsorbés dans la colonne, ladite zone 2 étant définie par une quantité de sorbant localisée entre une sortie d'un raffinat R "au solvant faible" à une extrémité amont de cette zone et une entrée d'un courant de rinçage à une extrémité aval de ladite zone,

d) On détermine une zone 3 d'adsorption du ou des constituants moyennement adsorbés immédiatement en amont de la zone 2, ladite zone 3 étant définie par une quantité de sorbant localisée entre une entrée dudit mélange à son extrémité amont et la sortie du raffinat R au solvant faible à l'extrémité aval de ladite zone 3.

e) On détermine une zone 4 de désorption du ou des constituants les moins adsorbés immédiatement en amont de la zone 3, ladite zone 4 étant définie par une quantité de sorbant localisée entre ladite entrée du mélange et une sortie d'un extrait E1 au solvant dit faible, défini ci-dessous, à une extrémité amont de ladite zone 4,

f) On détermine une zone 5 de désorption du ou des constituants moyennement adsorbés immédiatement en amont de la zone 4, ladite zone 5 étant définie par une quantité de sorbant localisée entre ladite sortie de l'extrait E1 au solvant faible et une entrée d'une alimentation en solvant faible à une extrémité amont de la zone 5,

g) On détermine une zone 6 de désorption du ou des constituants les plus adsorbés immédiatement en amont de la zone 5, ladite zone 6 étant définie par une quantité de sorbant localisée entre une sortie d'un extrait E2 au solvant dit fort défini ci-dessous à une extrémité aval de ladite zone 6 et une entrée d'une alimentation en solvant fort à une extrémité amont de ladite zone,

18

h) On alimente en solvant dit fort S2 l'extrémité amont de la zone 6, en solvant dit faible S1 l'extrémité amont de la zone 5 et en ledit mélange l'extrémité amont de la zone 3, le solvant S2 étant différent par sa nature chimique du solvant S1,

i) On fait circuler le mélange et un courant issu de la zone 4 dans la zone 3 dans des conditions d'adsorption telles qu'elles permettent l'adsorption du ou des constituants moyennement adsorbés dans ladite zone 3 et l'on soutire le raffinat R comprenant le ou les constituants les moins adsorbés et une partie du solvant faible,

j) On fait circuler le solvant fort S2 dans la zone 6 et une partie au moins du courant issu de la zone 1 dans des conditions de désorption telles qu'elles permettent la désorption du ou des constituants les plus adsorbés dans la zone 6 et l'on soutire l'extrait E2 comprenant le ou les constituants les plus adsorbés et une majeure partie du solvant S2 de la zone 6,

k) On fait circuler le solvant S1 et la partie restante du courant issu de la zone 6 dans la zone 5 dans des conditions de désorption telles qu'elles permettent la désorption du ou des constituants moyennement adsorbés dans la zone 5 et l'on soutire l'extrait E1 comprenant le ou les constituants moyennement adsorbés et une partie du solvant S1, de la zone 5,

l) On fait circuler un courant issu de la zone 5 dans la zone 4 dans des conditions d'adsorption telles qu'elles permettent l'adsorption du ou des constituants moyennement adsorbés dans la zone 4,

m) On fait circuler la partie restante du courant issu de la zone 3 dans la zone 2 dans des conditions d'adsorption telles qu'elles permettent l'adsorption du ou des constituants les moins adsorbés dans la zone 2,

n) On alimente en ledit courant de rinçage comprenant du solvant dit faible S1 l'extrémité amont de la zone 1 et on fait circuler ledit courant de rinçage et un courant issu de la zone 1 dans des conditions telles qu'elles permettent le reconditionnement de la colonne et l'on soutire le courant de recyclage de la zone,

o) On fait périodiquement avancer de manière synchrone à travers la colonne de sorbant dans la direction de la circulation du mélange et des solvants, l'entrée du mélange, la sortie du raffinat R, l'entrée du courant de rinçage F, la sortie du courant de recyclage, l'entrée du solvant dit fort S2, la sortie de l'extrait E2, l'entrée de solvant dit faible S1, la sortie de l'extrait E1, de façon à déplacer les zones 1,2,3,4,5 et 6 dans la colonne de sorbant et à produire les trois fractions : le raffinat R, l'extrait E1 et l'entrée E2, chacune des trois fractions contenant au moins un constituant, le ou les constituants de chaque fraction étant sensiblement récupérés en totalité ;

le procédé étant en outre caractérisé en ce qu'on fait circuler le courant de recyclage prélevé à l'extrémité aval de la zone 1 alternativement à l'extrémité amont de la zone 6 puis à l'extrémité amont de la zone 5 et en ce que on fait circuler une partie au moins du courant prélevé à l'extrémité aval de la zone 6 alternativement à l'extrémité amont de la zone 5 puis vers la sortie de l'extrait E2 au solvant fort S2.

2 - Procédé selon la revendication 1, dans lequel les conditions d'adsorption et les conditions de désorption comprennent des débits d'alimentation et de soutirage tels que les fronts d'élution se déplacent dans les différentes zones de l'amont vers l'aval de la colonne avec la même vitesse, et qui sont définis ci-dessous :

a) On alimente la zone 6 durant une première étape avec un débit $d_3 = d_1 + d_2$ avec $d_1$ étant le débit du courant de recyclage issu de la zone 1 et $d_2$ étant le débit d'alimentation en solvant fort S2, puis durant une deuxième étape avec un débit $d_3$ de solvant fort S2 sensiblement identique au débit lors de la première étape, et on récupère durant la première étape du solvant faible que l'on envoie dans un réservoir de stockage et durant une seconde étape, on récupère l'extrait E2 au solvant fort que l'on sépare de façon à obtenir le ou les constituants les plus adsorbés,

b) On alimente la zone 5 durant une première étape avec un débit $d_5$ tel que $d_5 < d_3$ d'une partie au moins du solvant faible provenant du réservoir ci-dessus et durant la seconde étape, on alimente la zone 5 avec un débit $d_1$ du courant de recyclage issu de la zone 1 et avec un débit $d_4$, tel que $d_4 = d_5 - d_1$, de la partie restante de solvant faible issu du réservoir de stockage puis éventuellement de solvant faible supplémentaire, et on récupère au moins en partie l'extrait E1 avec un débit $d_6$ tel que $d_6 < d_5$, que l'on sépare de façon à obtenir le ou les constituants moyennement adsorbés,

c) On alimente la zone 4 en la partie restante du flux issu de la zone 5 avec un débit égal à $d_5 - d_6$ de façon à obtenir en sortie un courant issu de la zone 4 de même débit

d) On alimente la zone 3 en ledit mélange avec un débit $d_7$ et en ledit courant issu de la zone 4 avec ledit $d_5 - d_6$, soit un débit total $d_5 - d_6 + d_7$ et l'on récupère avec un débit $d_8$ une partie au moins du raffinat R au solvant faible, que l'on sépare de façon à obtenir le ou les constituants les moins adsorbés, le débit $d_8$ étant tel que $d_8 + d_6 = d_4 + d_7$,

e) On alimente la zone 2 en la partie restante issue de la zone 3 avec un débit égal à $d_5 - d_6 + d_7 - d_8$, soit $d_1$ et on obtient en sortie avec un débit $d_1$ un courant issu de la zone 2,

f) On alimente la zone 1 en ledit courant issu de la zone 2 pendant une première étape avec un débit $d_1$

et on récupère avec un débit $d_1$ le courant de recyclage pour alimenter la zone 6 comme indiqué dans l'étape a), et pendant une deuxième étape, on alimente la zone 1 avec un débit $d_1 + d_9$, $d_1$ étant le débit du courant issu de la zone 2, $d_9$ étant le débit du courant de rinçage et on soutire avec un débit $d_1 + d_9$ le courant de recyclage que l'on envoie avec un débit $d_1$ à l'entrée de la zone 5 et avec un débit $d_9$ vers une distillation pour séparer le solvant faible du solvant fort,

3 - Procédé selon l'une des revendications 1 à 2 dans lequel on maintient les zones 2 à 6 à une température sensiblement constante et dans lequel on augmente la température de la zone 1 d'au moins 10°C par rapport à la température des zones 2 à 6.

4 - Procédé selon l'une des revendications 1 à 3 dans lequel on opère à une pression dans la zone 6 supérieure d'au moins 1 MPa à celle des autres zones.

5 - Dispositif de séparation en continu et en phase fluide d'un mélange d'au moins trois constituants en trois fractions caractérisé en ce qu'il comprend en combinaison au moins une colonne de séparation comportant six zones contiguës dont chacune comprend au moins une section remplie d'un sorbant, chaque section étant de volume sensiblement identique et ayant une entrée et une sortie, la sortie d'une section étant reliée à l'entrée de la suivante par une liaison 100 adaptée à la circulation du fluide dans une direction déterminée grâce à des moyens anti-retour 34 connectés à cette liaison, l'entrée de chaque section comportant, des moyens d'alimentation en un courant de rinçage 35, des moyens d'alimentation 38 en mélange, des moyens d'alimentation 36 en solvant S1 et des moyens d'alimentation 37 en solvant S2, la sortie de chaque section comportant en amont des moyens anti-retour, des moyens de soutirage 31 d'un extrait E1 au solvant faible S1, des moyens de soutirage 30 d'un extrait E2 au solvant fort S2, des moyens de soutirage 32 d'un raffinat R au solvant faible, des moyens de soutirage 33 d'un courant de recyclage, soit un de ces moyens d'alimentation étant adapté à délivrer une alimentation, soit un de ces moyens de soutirage étant adapté à délivrer un soutirage : le dispositif étant caractérisé en outre en ce que l'ensemble de ces moyens d'alimentation et de soutirage sont agencés de telle façon que :

- une sixième zone 6 est délimitée par une entrée reliée aux moyens d'alimentation en solvant S2 et par une sortie reliée aux moyens de soutirage en extrait E2 au solvant fort ;
- une cinquième zone 5 immédiatement en aval de la sixième zone reliée aux moyens d'alimentation en solvant S1, dit faible et par une sortie reliée aux moyens de soutirage en extrait E1 au solvant faible ;
- une quatrième zone 4 immédiatement en aval de la cinquième zone est délimitée par une entrée reliée à la sortie de la cinquième zone et par une sortie reliée aux moyens d'alimentation en mélange ;
- une troisième zone 3 immédiatement en aval de la quatrième zone est délimitée par une entrée reliée à la sortie de la quatrième zone 4 et par une sortie reliée aux moyens de soutirage de raffinat R au solvant faible ;
- une seconde zone 2 immédiatement en aval de la troisième zone est délimitée par une entrée reliée à la sortie de la troisième zone et par une sortie reliée aux moyens d'alimentation en courant de rinçage ;
- une première zone 1 immédiatement en aval de la seconde zone est délimitée par une entrée reliée à la sortie de la seconde zone et par une sortie reliée aux moyens de soutirage du courant de recyclage ;
le dispositif étant en outre caractérisé en ce qu'il comprend :
- des moyens de déplacements successifs, dans la direction de la circulation du fluide d'une part, des dits moyens de soutirage de l'extrait E1, de l'extrait E2, du raffinat R et du courant de recyclage et d'autre part des dits moyens en alimentation en solvant S1, en solvant S2, en courant de rinçage, et en mélange, ces moyens étant adaptés à réaliser des conditions dites à contre-courant simulé, le dispositif étant de plus caractérisé en ce qu'il comporte des moyens adaptés à connecter la sortie de la première zone 1 alternativement à l'entrée de la sixième zone 6 puis à l'entrée de la cinquième zone 5 et en ce qu'il comporte des moyens adaptés à connecter la sortie de la sixième zone 6 alternativement à l'entrée de la cinquième zone 5 puis aux moyens de soutirage de l'extrait El au solvant fort.

6 - Dispositif selon la revendication 5 caractérisé en ce qu'il comporte des moyens de régulation de débit reliés aux moyens d'alimentation et de soutirage et adaptés à faire se déplacer les fronts d'élution dans les différentes zones à la même vitesse.

7 - Dispositif selon la revendication 5 ou 6, caractérisé en ce que les moyens d'alimentation en solvant S1, en solvant S2, en mélange, et en courant de rinçage et les moyens de soutirage en extrait E2 au solvant S2, en extrait E1, au solvant S1, en raffinat et en courant de recyclage comportent chacun d'eux une vanne adaptée à mettre alternativement en communication chacun des flux avec toutes les sections.

8 - Dispositif selon l'une des revendications 5 à 7 caractérisé en ce que les zones 1 à 6 comportent des moyens de régulation de la température adaptés à assurer une température sensiblement constante dans les zones 2 à 6 et une température plus élevée dans la zone 1.

9 - Dispositif selon l'une des revendications 5 à 8 caractérisé en ce qu'il comporte des moyens de mise en pression adaptés à assurer une pression dans la sixième zone 6 supérieure à celle des autres zones.

10 - Dispositif selon la revendication 9 dans lequel les moyens de mise en pression comprennent une vanne adaptée à une circulation en série entre chaque deux sections consécutives et à une régulation de pression différentielle entre deux sections consécutives particulières, cette vanne étant connectée en série sur ladite liaison.

11 - Application du procédé selon l'une des revendications 1 à 5 ou de l'appareil selon l'une des revendications 6 à 10, dans un procédé de séparation d'un mélange contenant du paraxylène, de l'éthyl benzène, de l'orthoxylène et du métaxylène, dans un procédé d'épuration contenant le même mélange pollué par des impuretés azotées telles que la picoline, dans un procédé de séparation d'un mélange de xylose, glucose et arabinose, et dans un procédé de production d'arômes ou huiles essentielles.

# FIG.1

**FIG.2**

## FIG.3

**FIG.4**

FIG.5

EP 0 415 821 A1

**FIG.6**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | FR-A-2 274 331 (EXXON)<br>* Page 24, ligne 8 - page 43 * | 1 | B 01 D  15/02<br>B 01 D  15/08 |
| A | | 5,7,8,<br>11 | |
| | --- | | |
| D,Y | US-A-4 498 991 (OROSKAR)<br>* Colonne 11, ligne 1 - colonne 12, ligne 26; colonne 18, lignes 3-19 * | 1 | |
| | --- | | |
| A,D | EP-A-0 290 684 (U.O.P.)<br>* Page 9, ligne 25 - page 10, ligne 20 * | 1,11 | |
| | --- | | |
| D,A | US-A-3 728 843 (NAGY)<br>* Colonne 2, ligne 4 - colonne 3, ligne 65; colonnes 4-6; revendications *<br>----- | 4,9,10 | |

|  | DOMAINES TECHNIQUES RECHERCHES (Int. Cl.5) |
|---|---|
| | B 01 D |

Le présent rapport a été établi pour toutes les revendications

| Lieu de la recherche | Date d'achèvement de la recherche | Examinateur |
|---|---|---|
| LA HAYE | 16-10-1990 | WENDLING J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................................
& : membre de la même famille, document correspondant

EPO FORM 1503 03.82 (P0402)